# EUROPEAN PATENT SPECIFICATION

(11) **EP 2 345 971 B1**
(45) Date of publication and mention of the grant of the patent: **28.03.2012**
(21) Application number: 10151130.1
(22) Date of filing: 19.01.2010
(51) Int. Cl.: G06F 17/27, G06F 3/023

(54) **Mobile electronic device and associated method providing proposed spelling corrections based upon cursor location**
Mobile elektronische Vorrichtung und dazugehöriges Verfahren zur Bereitstellung vorgeschlagener Rechtschreibkorrekturen basierend auf der Stelle des Cursors
Dispositif électronique mobile et procédé associé fournissant des corrections d'orthographe proposées en fonction de l'emplacement du curseur

(43) Date of publication of application: 20.07.2011
(73) Proprietor: RESEARCH IN MOTION LIMITED, Waterloo, Ontario N2L 3W8 (CA)
(72) Inventor: Wood, Christopher, William, Guelph Ontario N1E 6J1 (CA)
(74) Representative: MERH-IP Matias Erny Reichl Hoffmann

(56) References cited:
- EP-A1- 2 045 691
- WO-A1-00/62150

## Description

### BACKGROUND

### Field

The disclosed and claimed concept relates generally to text entry on a mobile electronic device and, more particularly, to a mobile electronic device and method that provide proposed spelling corrections of a text entry based upon a location of cursor at or adjacent a character of the text entry.

### Background Information

Numerous types of mobile electronic devices are known. Examples of such mobile electronic devices include, for instance, personal data assistants (PDAs), mobile computers, two-way pagers, cellular telephones, and the like. Many mobile electronic devices also feature wireless communication capability, although many such mobile electronic devices are stand-alone devices that are functional without communication with other devices.

While such mobile electronic devices have generally been effective for their intended uses, they have not been without limitations. Users of mobile electronic devices typically are able to direct at most only a limited amount of attention to the operation of a mobile electronic device since such users typically are involved in other activities. As such, features of mobile electronic devices that require significant attention from a user often are underutilized or are not used at all. On the other hand, features which are configured to reduce or minimize the amount of attention required of a user are highly desirable. The inputting of text typically requires a substantial amount of user attention, and the reviewing of text for possible spelling errors often requires even more attention. It thus would be desirable to provide improved text input and spelling correction that address some or all of these shortcomings.

### BRIEF DESCRIPTION OF THE DRAWINGS

A full understanding of the disclosed and claimed concept can be gained from the following Description when read in conjunction with the accompanying drawings in which:

Fig. 1 is a top plan view of an improved mobile electronic device in accordance with the disclosed and claimed concept;

Fig. 2 is a schematic depiction of the improved mobile electronic device of Fig. 1;

Fig. 3 is a first example view of a text input operation;

Fig. 4 is a second example view of the text input operation of Fig. 3;

Fig. 5 is an alternative second example view of the text input operation of Fig. 3;

Figs. 6A, 6B, and 6C comprise an example flowchart depicting aspects of an improved method in accordance with the disclosed and claimed concept;

Fig. 7 is an example home screen that can be visually output on the mobile electronic device of Fig. 1;

Fig. 8 depicts an example menu that can be output on the mobile electronic device of Fig. 1;

Fig. 9 depicts another example menu;

Fig. 10 depicts an example reduced menu;

Fig. 11 is an output such as could occur during another example text entry or text editing operation;

Fig. 12 is an output during another example text entry operation;

Fig. 13 is an alternative output during the example text entry operation of Fig. 12;

Fig. 14 is another output during another part of the example text entry operation of Fig. 12;

Fig. 15 is an example output during a data entry operation;

Fig. 16 is a top plan view of an improved mobile electronic device in accordance with another embodiment of the disclosed and claimed concept; and

Fig. 17 is a schematic depiction of the improved mobile electronic device of Fig. 16.

Similar numerals refer to similar parts throughout the specification.

### DESCRIPTION

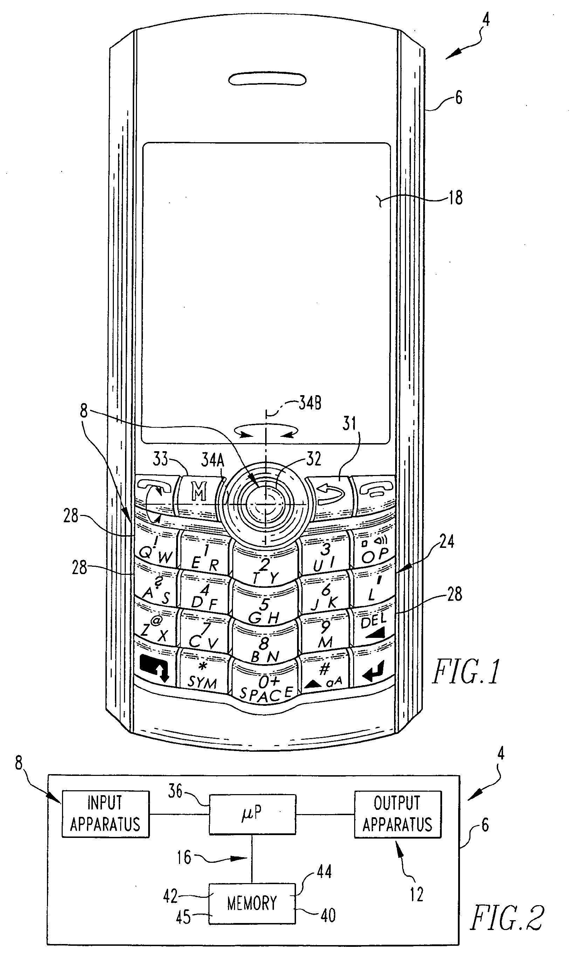

An improved mobile electronic device 4 is indicated generally in Fig. 1 and is depicted schematically in Fig. 2. The example mobile electronic device 4 includes a housing 6 upon which are disposed an input apparatus 8, an output apparatus 12, and a processor apparatus 16. The input apparatus 8 is structured to provide input to the processor apparatus 16, and the output apparatus 12 is structured to receive output signals from the processor apparatus 16. The output apparatus 12 comprises a display 18 that is structured to provide visual output, although other output devices such as speakers, LEDs, tactile output devices, and so forth can be additionally or alternatively used.

As can be understood from Fig. 1, the input apparatus 8 includes a keypad 24 and an input navigation device which, in the example embodiment depicted herein, is a track ball 32 that will be described in greater detail below. The keypad 24 comprises a plurality of keys 28 in the example form of a reduced QWERTY keyboard, meaning that at least some of the keys 28 each have a plurality of linguistic elements assigned thereto, with at least some of the linguistic elements being characters in the form of Latin letters arranged generally in a QWERTY configuration. The keys 28 and the track ball 32 all serve as input elements that are actuatable to provide input to the processor apparatus 16. The keypad 24 and the track ball 32 are advantageously disposed adjacent one another on a front face of the housing 6. This enables operation of the track ball 32 substantially without moving the hands away from the keypad 24 during a text entry operation or other operation.

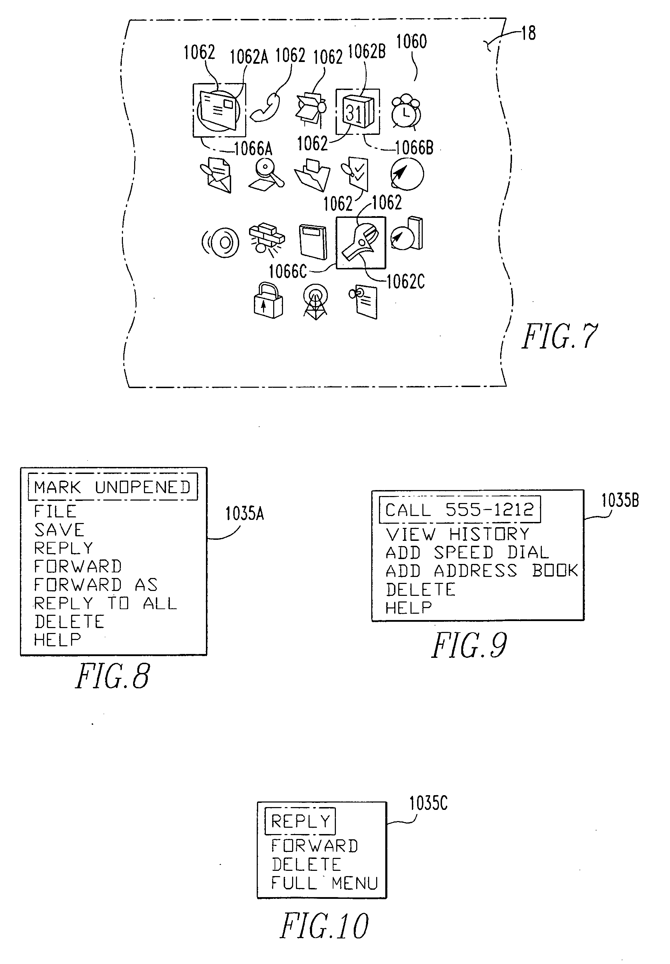

One of the keys 28 is an <ESCAPE> key 31 which, when actuated, provides to the processor apparatus 16 an input that undoes the action which resulted from the immediately preceding input and/or moves the menu position to a position logically higher within a logical menu tree managed by a graphical user interface (GUI) routine 46. The function provided by the <ESCAPE> key 31 can be used at any logical location within any portion of the logical menu tree except, perhaps, at a home screen such as is depicted in Fig. 7. The <ESCAPE> key 31 is advantageously disposed adjacent the track ball 32 thereby enabling, for example, an unintended or incorrect input from the track ball 32 to be quickly undone, i.e., reversed, by an actuation of the adjacent <ESCAPE> key 31.

Another of the keys 28 is a <MENU> key 33 which, when actuated, provides to the processor apparatus 16 an input that causes the GUI 46 to generate and output on the display 18 a menu such as is depicted in Fig 9, which will be discussed in greater detail elsewhere herein. Such a menu is appropriate to whatever is the current logical location within the logical menu tree, as will be likewise described in greater detail elsewhere herein.

While in the depicted example embodiment the input navigation device is the track ball 32, it is noted that input navigation devices other than the track ball 32 can be employed without departing from the present concept. For instance, other appropriate input navigation devices could include mechanical devices such as joysticks and the like and/or non-mechanical devices such as touch pads, track pads and the like and/or other devices which detect motion or input in other fashions, such as through the use of optical sensors or piezoelectric crystals.

The track ball 32 is freely rotatable in all directions with respect to the housing 6. A rotation of the track ball 32 a predetermined rotational distance with respect to the housing 6 provides an input to the processor apparatus 16, and such inputs can be employed by a number of routines, for example, as navigational inputs, scrolling inputs, selection inputs, and other inputs. As employed herein, the expression "a number of" and variations thereof shall refer broadly to any non-zero quantity, including a quantity of one.

For instance, and as can be seen in Fig. 1, the track ball 32 is rotatable about a horizontal axis 34A to provide vertical scrolling, navigational, selection, or other inputs. Similarly, the track ball 32 is rotatable about a vertical axis 34B to provide horizontal scrolling, navigational, selection, or other inputs. Since the track ball 32 is freely rotatable with respect to the housing 6, the track ball 32 is additionally rotatable about any other axis (not expressly depicted herein) that lies within the plane of the page of Fig. 1 or that extends out of the plane of the page of Fig. 1.

The track ball 32 can be said to be an input navigation device because it provides scrolling, navigational, selection, and other inputs in a plurality of directions or with respect to a plurality of axes, such as providing inputs in both the vertical and the horizontal directions. It is reiterated that the track ball 32 is merely one of many input navigation devices that could be employed on the mobile electronic device 4. As such, mechanical alternatives to the track ball 32, such as a joystick, might have a limited rotation with respect to the housing 6, and non-mechanical alternatives might be immovable with respect to the housing 6, yet all are capable of providing input in a plurality of directions and/or along a plurality of axes.

The track ball 32 additionally is translatable toward the housing 6, i.e., into the plane of the page of Fig. 1, to provide additional inputs. The track ball 32 could be translated in such a fashion by, for example, a user applying an actuating force to the track ball 32 in a direction toward the housing 6, such as by pressing on the track ball 32. The inputs that are provided to the processor apparatus 16 as a result of a translation of the track ball 32 in the indicated fashion can be employed by the routines, for example, as selection inputs, delimiter inputs, or other inputs.

As can be seen in Fig. 2, the processor apparatus 16 comprises a processor 36 and a memory 40. The processor 36 may be, for instance and without limitation, a microprocessor (µP) that is responsive to inputs from the input apparatus 8 and that provides output signals to the output apparatus 12. The processor 36 interfaces with the memory 40.

The memory 40 can be said to constitute a machine-readable storage medium and can be any one or more of a variety of types of internal and/or external storage media such as, without limitation, RAM, ROM, EPROM(s), EEPROM(s), FLASH, and the like that provide a storage register for data storage such as in the fashion of an internal storage area of a computer, and can be volatile memory or nonvolatile memory. The memory 40 has stored therein the aforementioned number of routines which are executable on the processor 36. The routines can be in any of a variety of forms such as, without limitation, software, firmware, and the like. As will be explained in greater detail below, the routines include a spell checking routine 44, a disambiguation routine 45, and the aforementioned GUI 46, as well as other routines.

The memory 40 additionally has a dictionary 42 stored therein. The dictionary 42 has a plurality of words, abbreviations, acronyms, and the like stored therein that can be accessed in one fashion or another by the disambiguation routine 45 and the spell checking routine 44 for purposes such as the disambiguation of ambiguous text input and the identification of proposed spelling corrections in the event of a misspelled word.

Whenever the spell checking routine 44 is initiated with respect to a quantity of text, the spell checking routine checks each text entry to determine whether or not it is a word or other textual object that is found in the dictionary 42. If any text entry cannot be found in the dictionary 42, it is considered to be a word that has been misspelled, and the spell checking routine 44 operates seeking to identify one or more proposed spelling corrections that could be used to replace the misspelled word. A new word that is not already stored in the dictionary 42 might be identified by the spell checking routine 44 as being misspelled despite the new word actually being correctly entered. That is, a determination by the spell checking routine 44 that a word is misspelled could be considered to be a determination that the word is at least potentially misspelled but potentially might be correctly spelled and new to the dictionary 42.

Four conventional spell check algorithms can be referred to as the INSERT, SWAP, REPLACE, and DELETE algorithms, and all of them contribute to the determination of an edit distance between a misspelled word and a candidate spelling correction. The INSERT spell check algorithm operates essentially according to the principle that any character in the alphabet can be inserted in front of any character in a misspelled word, or behind such a character in a misspelled word, and any single such single insertion will constitute an edit distance of one from the misspelled word. That is, the character string that is generated by such a single insertion will have an edit distance of one from the misspelled word. The SWAP spell check algorithm operates essentially according to the principle that any two adjacent characters in a misspelled word can be swapped with one another, and any single such swap constitutes an edit distance one from the misspelled word. The REPLACE spell check algorithm operates essentially according to the principle that any given character in a misspelled word can be replaced with another character, and any single such replacement will constitute an edit distance of one from the misspelled word. The DELETE algorithm operates essentially according to the principle that any character in a misspelled word can be deleted, and any single such deletion constitutes an edit distance of one from the misspelled word. Thus, if the difference between a misspelled word and a candidate spelling correction is a single INSERT or a single SWAP or a single REPLACE or a single DELETE, the edit distance between the misspelled word and the candidate spelling correction is an edit distance of one. However, if the difference between the misspelled word and the candidate spelling correction includes more than one instance of one of the spell check algorithms, or requires the application of more than one spell check algorithm, the misspelled word and the candidate spelling correction-will be at an edit distance of two or more.

Numerous additional spell checking algorithms and spell checking methodologies are known, but the aforementioned four known spell checking algorithms INSERT, SWAP, REPLACE, and DELETE are most typically relied upon in current spell checking methodologies since they can easily be employed in spell checking and the edit distance between a misspelled word and a candidate spelling correction that uses such an algorithm can be readily determined.

As mentioned elsewhere herein, many spell checking methodologies provide proposed spelling corrections that are within a certain editing distance of a misspelled word. As an example, many spell checking methodologies will output only those words as proposed spelling corrections having an edit distance of at most one from the misspelled word. However, known spell checking methodologies are unable to determine which from among the various words in a dictionary having an edit distance of one from a misspelled word is the word that was intended when the text entry was input. That is, known spell checking methodologies are unable to determine the precise location of an error in a misspelled text entry. By way of example, if the user had intended to type the word "sent" and instead erroneously typed "sant", the words that could typically be found in the dictionary that are within an edit distance of one from "sant" include "sent", "sand", "sane", "sat", "ant", "salt", "rant", "want", "pant", "santa", although other words, abbreviations, acronyms, and the like are possible. The aforementioned proposed spelling corrections could be identified by the aforementioned INSERT, SWAP, REPLACE, and DELETE spell checking algorithms.

Most known spell checking methodologies would output most if not all of these proposed spelling corrections for selection by a user. It is noted, however, that in the instant example the actual error is an erroneously typed "a" in place of the intended "e", and the other letters "s", "n", and "t" are correct, at least as it concerns the input that was intended. However, since known spell checking methodologies are unable to identify the actual error in the text entry, it can be seen that some of the aforementioned proposed spelling corrections replace the first character "s" with other characters, such as with "rant", "want", "pant", and other proposed spelling corrections replace the final character "t" with other characters, such as with "sand" and "sane". One proposed spelling correction deletes the first character "s", and another proposed spelling correction adds a character after the "t". The need to review a list of ten proposed spelling corrections can be burdensome when only one of the ten proposed spelling corrections is the desired spelling.

Advantageously, therefore, the claimed concept enables a determination of the location of an error within a text entry by detecting a location of a cursor at or adjacent a character of a text entry that is determined to be at least potentially misspelled. As such, even though the aforementioned ten proposed spelling corrections are each within an edit distance of one from the misspelled text entry "sant", the spell checking methodology employed in the embodiment disclosed herein advantageously detects a location of a cursor at or adjacent the erroneously typed character "a" of "sant" and tailors the outputting of proposed spelling corrections to those having a character difference with the misspelled text entry corresponding to the location of the cursor.

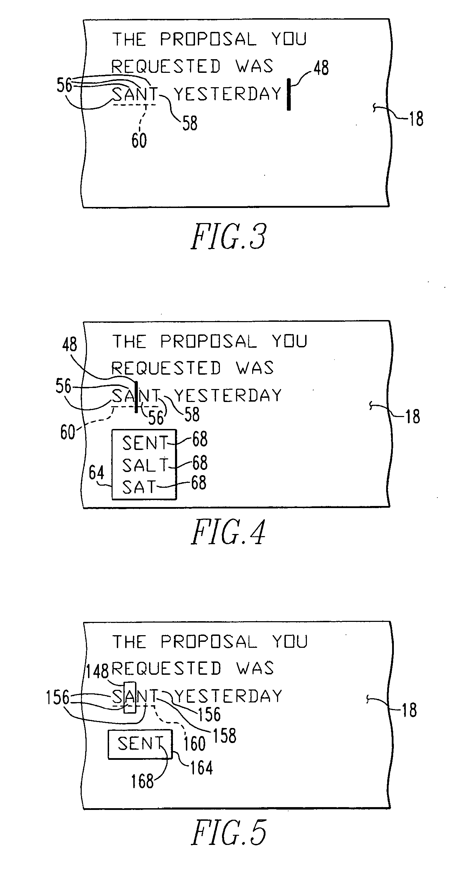

Examples of the foregoing are set forth in Figs. 3-5. In Fig. 3, a text entry 58 "sant" is a misspelling of the intended word "sent". The text entry 58 "sant" comprises four characters 56, and it can be seen that a character 56 "a" is the actual misspelled character of the text entry 58 "sant" when the intended input was the word "sent". The mistyped character 56 "a" can be said to be the actual location of the error within the misspelled text entry 58 "sant".

In Fig. 3, a cursor 48 is indicated as being spaced from the misspelled text entry 58 "sant", meaning that it is not situated at a location at or adjacent any character 56 of the misspelled text entry 58 "sant".

Fig. 3 further depicts an underscore 60 underneath the misspelled text entry 58 "sant", which is indicative of the processor apparatus 16 having determined that the text entry 58 "sant" is at least potentially misspelled. In this regard, it is noted that the spell checking methodology whereby the processor apparatus 16 determines whether or not a given text entry 58 is misspelled can be operative at any time. That is, the detection that a text entry 58 is potentially misspelled and the outputting of the underscore 60 or other such indication of a potential misspelling can be triggered responsive to any of a variety of events such as the delimiting of a text input 58, or by the direct actuation of a spell checking system, such as responsive to a predetermined input of one type or another, and the like. Advantageously, however, and as will be set forth in greater below, the processor apparatus 16 can provide the underscore 60 as an indication that a text entry 58 is at least potentially misspelled without additionally outputting proposed spelling corrections. Rather, the actual outputting of one or more proposed spelling corrections for a text entry 58 that is at least potentially misspelled is provided responsive to the occurrence of a predetermined event as will be set forth in greater detail below.

As is indicated in Fig. 4, the cursor 48 has been moved from its former location in Fig. 3 to a location adjacent the character 56 "a" of the misspelled text entry 58 "sant" and, more specifically, is disposed between the characters 56 "a" and "n" thereof. Such a movement of the cursor 48 from its position in Fig. 3 to that of Fig. 4, for instance, may have been accomplished via navigational inputs with the track ball 32 or otherwise in a known fashion. Such a movement input could also occur via a touch at the desired location of the cursor 48 in the event the display 18 is a touch sensitive display.

Further in Fig. 4, it can be seen that the processor apparatus 16 has caused the outputting of window 64 that comprises one or more proposed spelling corrections 68 for review and possible selection by a user. The outputting of the window 64 with its proposed spelling corrections 68 can be triggered in any of a variety of fashions. For instance, the processor apparatus 16 may detect that the cursor 48 is situated at a location adjacent a character 56 of a text entry 58 that is at least potentially misspelled, it being reiterated that the underscore 60 already indicates that at least some preliminary spell checking processing has occurred and has already determined that the text entry 58 "sant" is at least potentially misspelled.

In the event that the processor apparatus 16 detects the cursor 48 at or adjacent a character 56 of a text entry 58 that is at least potentially misspelled, the system may automatically and responsively output the window 64 with its proposed spelling corrections 68, although the outputting of the window 64 in one embodiment disclosed herein may additionally conditioned upon the cursor 48 remaining at such a location for a predetermined period of time. That is, the outputting of the window 64 may be responsive to the detection of the cursor 48 adjacent a character 56 of a text entry 58 that is at least potentially misspelled so long as the cursor 48 remains at such a location for a predetermined period of time without the detection of another input. The predetermined period of time could be, for example, 0.5 seconds although other predetermined periods of time can be employed without departing from the present concept.

The provision of the delay, i.e., the outputting of the window 64 after a predetermined period of time without the detection of another input, advantageously would help to avoid distracting the user with unnecessary windows 64 while the cursor 48 is being moved to a desired location. For instance, if the cursor 48 is moved from its position in Fig. 3 to a location to the right of the character 56 "t" of the misspelled text entry 58 "sant", the processor apparatus 16 will detect that the cursor 48 is indeed at a location adjacent a character 56 of a text entry 58 that is at least potentially misspelled. In such a situation, such a methodology would provide in a window 64 (not shown) the proposed spelling corrections 68 (not shown) "sand", "sane", and "santa". However, if the disposition of the cursor 48 to the right of the character 56 "t", is transitory, meaning that it is in such position for only a tiny period of time as it is moved, for instance, to the position depicted generally in Fig. 4, the outputting of such a window 64 potentially could be distracting to the user. Thus, the use of such a predetermined period of time of the cursor 48 being disposed at or adjacent a character 56 as a condition for outputting the window 64 can be desirable as avoiding distraction to the user.

It is also possible that the outputting of the window 64 can be responsive to a detection of a predetermined input, such as an actuation of the track ball 32 by translating it into a direction into the page of Fig. 1, as mentioned above. Other predetermined inputs such as actuations of specific keys 28 or key sequences or other types of inputs can be employed without departing from the present concept. Such a predetermined input can be implemented in any of a variety of fashions. For instance, such an actuation of the track ball 32 can be used to trigger the outputting of the window 64 prior to the expiration of the predetermined period of time. That is, the window could be output if desired prior to the expiration of the predetermined period of time.

In alternative embodiments, such an actuation of the track ball 32 or other such predetermined input can be employed instead of relying upon an expiration of a predetermined period of time without an additional movement input being detected. For instance, the spell checking methodology could be configured such that the windows 64 is output only after the detection of an actuation of the track ball 32 or other predetermined input when the cursor 48 is disposed at or adjacent a character 56 of a text entry 58 that is at least potentially misspelled regardless of the amount of time the cursor 48 has remained in such a position. That is, the processor apparatus 16 might be configured to detect the location of the cursor 48 at or adjacent a character 56 of a text entry 58 that is at least potentially misspelled, but no window 64 is output on the display unless and until an actuation of the track ball 32 or other predetermined input from the input apparatus 8 is detected. In this regard, it is possible that the spell checking methodology might be configured such that no determination is made with respect to whether the text entry 58 at the location of the cursor 48 is at least potentially misspelled until an actuation of the track ball 32 or other predetermined input is detected. In such a situation, the underscore 60 may be absent from the display 18.

In the example embodiment depicted herein, and as suggested elsewhere herein, the processor apparatus 16 and the spell checking system deployed thereon outputs the window 64 in predetermined circumstances, with the window 64 advantageously comprising a fine-tuned or focused set of proposed spelling correction 68, with the fine-tuning or focusing of such proposed spelling corrections 68 being based upon the detected location of the cursor 48. In the example embodiment depicted herein, this is accomplished by subjecting the text entry 58 to any of a variety of spell checking algorithms such as the aforementioned INSERT, SWAP, REPLACE, and DELETE spell checking algorithms or other spell checking algorithms in any combination to result in a set of spelling corrections that are identified for possible output. In the embodiment depicted herein, all ten of the proposed spelling corrections for possible output mentioned above each have a number of characters 56 and each have an edit distance that is no greater than one from the example text entry 58 "sant". A determination is then made for each of the spelling corrections for possible outputting whether any given spelling correction has a character difference, when compared with the text entry 58, that corresponds with the location of the cursor 48 at or adjacent a character 56 of the text entry 58. For instance, each spelling correction that has been identified for possible output is compared with a number of criteria, and if one of the criteria is met the spelling correction will be added to an output buffer for outputting as a proposed spelling correction 68 in a window 64. If the spelling correction lacks a character difference that meets one of the applicable criteria, the spelling correction is suppressed from the output buffer.

A first example criterion would be whether a character of the text entry 58 at or adjacent the cursor 48 is absent from corresponding position in the proposed spelling correction. In the example of the misspelled text entry 58 "sant", the proposed spelling correction 68 "sat" would meet such a criterion since in Fig. 4 the cursor 48 is adjacent the character 56 "n", and the character 56 "n" is absent from a corresponding location in the proposed spelling correction 68 "sat".

Another example criterion is whether the proposed spelling correction comprises a character additional to the text entry 58 that is disposed at a position in the proposed spelling correction that corresponds with a position at or adjacent the cursor 48 in the text entry 58. While such an example is not depicted herein, such a criterion would be met by the aforementioned proposed spelling correction 68 "santa" that would be output if the cursor 48 was at or adjacent the character 56 "t" of the text entry 58 "sant" upon the outputting of the window 64 (not shown), it being noted that the cursor 48 could be situated adjacent the character 56 "t" to the left or right thereof.

A further example criterion is whether a character of the text entry 58 at or adjacent the cursor 48 is replaced with a different character in a corresponding position in the proposed spelling correction. Such a criterion would be met by the proposed spelling corrections 68 "sent" and "salt". That is, the proposed spelling correction "sent" would result from a replacement of the character 56 "a" adjacent the cursor 48 in Fig. 4 with the letter "e" in the proposed spelling correction 68 "sent". The proposed spelling correction 68 "salt" would result from a replacement of the character 56 "n" in the text entry 58 "sant" with the character 56 "I" in the proposed spelling correction 68 "salt".

Another example criterion is whether a character 56 of the text entry 58 at or adjacent the cursor 48 and another character 56 adjacent thereto in the text entry 58 are at swapped positions in the proposed spelling correction. While an example of such a proposed spelling correction is not depicted in the accompanying figures, an example potentially could be the word "snat" if such a word was found in the dictionary 42. In such a situation, the positions of the characters 56 "a" and "n" in the text entry 58 would be swapped in such a hypothetical proposed spelling correction "snat".

As mentioned above, all of the spelling corrections that are identified by the spell checking methodology for possible output are compared with the aforementioned example criteria, and if one of the criteria is met by a spelling correction, the spelling correction is added to an output buffer for output as a proposed spelling correction 68 in a window 64 as set forth above. Any spelling corrections that have been identified for possible output on the display 18 that are determined to fail to meet any of the applicable criteria, such as the four criteria set forth above, could be said to lack a character difference that is specified by the location of the cursor 48 at or adjacent a character of a text entry 58 that is at least potentially misspelled and thus would be suppressed from the output buffer and thus suppressed from being output in a window 64.

The example cursor 48 depicted generally in Figs. 3 and 4 can be referred to as a "vertical line" cursor that would be disposed "adjacent" one or more character 56 of a text entry 58. In the example depicted generally in Fig. 4, the cursor 48 is disposed adjacent and between two characters 56, with the result that the window 64 includes three proposed spelling corrections 68. This is due to the location of the cursor 48 in Fig. 4 which is depicted by the processor apparatus 16 as being indicative that the character 56 "a" or the character 56 "n" or both are erroneous in the text entry 58 "sant".

An alternative embodiment of the instant concept that includes an alternative cursor 148 in the example form of a box is depicted generally in Fig. 5. The cursor 148 is depicted in Fig. 5 as being "at" the character 156 "a", which provides an even more specific indication of the location of the erroneous portion of the text entry 158 "sant". That is, the location of the cursor 148 in Fig. 5 at the character 156 "a" specifies the character 156 "a" as being the erroneous portion of the text entry 158 "sant", with the result that the only proposed spelling correction 168 in the window 164 is the proposed spelling correction 68 "sent", which is precisely the word that was intended. The text entry 158 "sant" is indicated in Fig. 5 as being at least potentially misspelled by the underscore 160.

The alternative cursor 148 can be obtained in any of a variety of fashions. For instance, the mobile electronic device 4 can be configured such that the cursor 48 is depicted as in Fig. 3 for all new text inputting but automatically switches to the alternate cursor 148 when navigational input moves it past an existing character of a text entry. Similarly, the cursor 148 may have the same appearance at all times during text input.

While it is understood from Fig. 5 that the cursor 148 can be characterized as being situated "at" the character 156 "a", it is not intended to additionally be considered to be situated "adjacent" the characters 156 "s" and "n" of the text entry 158 for purposes of generating proposed spelling corrections for output in the window 164. That is, the vertical line cursor 48 is disposed "adjacent" either a single character 56 or a pair of characters 56 for purposes of determining the position of the cursor 48 "adjacent" one or more characters 56 of a text entry 58. In contrast, the cursor 148 will only ever be analyzed as being "at" a single character 156 and will not additionally be considered to be "adjacent" one or more other characters 156. However, it is expressly understood that the mobile electronic device 4 could be configured such that the cursor 148 is detected as being disposed "adjacent" a single character 156, such as if the cursor 148 is disposed to the left of the character 156 "s" of the text entry 58 "sant" without additionally being "at" the character 56 "s". In other words, for purposes of proposed spelling corrections for output in a window 64, the cursor 48 will be detected as being "adjacent" one or two characters, and the cursor 148 may be "at" a single character or "adjacent" a single character, but the cursor 148 will not be disposed "at" a character and additionally be "adjacent" one or more other characters for purposes of determining compliance of any applicable criteria as mentioned above.

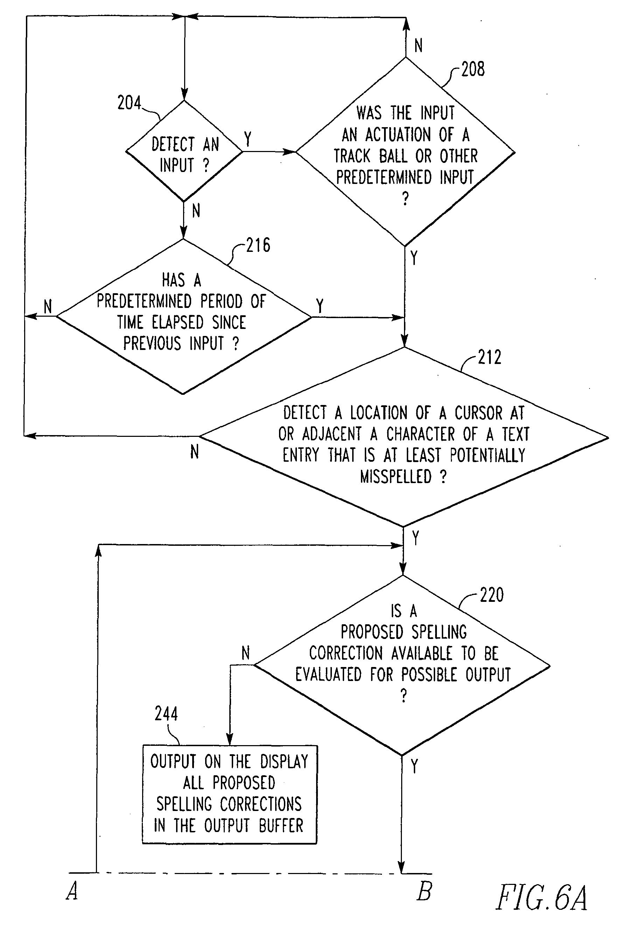

Figs. 6A-6C are in the form of a flowchart depicting certain aspects of an improved method that can be executed on the improved mobile electronic device 4. It is first determined, as at 204, whether an input has been detected. If an input has been detected at 204, it will then be determined, as at 208, whether the input was an actuation of the track ball 32 or other such predetermined input as would be provided to trigger the outputting of a window 64. If the detected input is not such an actuation of the track ball 32 or other such predetermined input, processing returns to 204 where it is determined whether further input is detected.

On the other hand, if it is determined, as at 208, that the input was an actuation of the track ball 32 or other such predetermined input, processing continues as at 212, where it is determined whether a location of a cursor 48 or 148 is detected as being at or adjacent a character 56 or 156 of a text entry 58 or 158 that is at least potentially misspelled. If it is determined at 212 that the cursor 48 or 148 is not disposed at or adjacent a character 56 or 156 of such a potentially misspelled text entry 58 or 158, processing returns to 204.

If at 204 no input is detected, processing continues, as at 216, where it is determined whether a predetermined period of time has elapsed since the previous input. If such a predetermined period of time has not elapsed since the previous input, processing returns to 204. However, if it is determined that the predetermined period of time has, in fact, elapsed, processing continues at 212 as mentioned above.

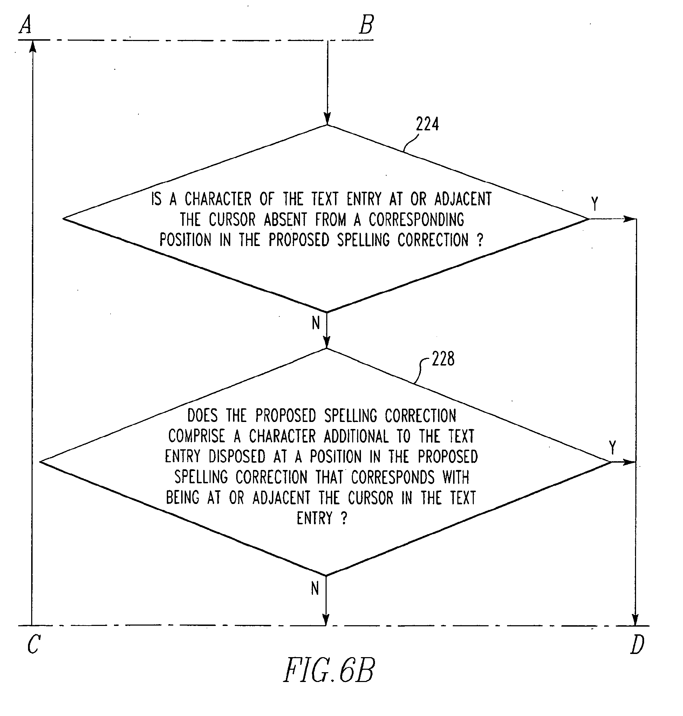

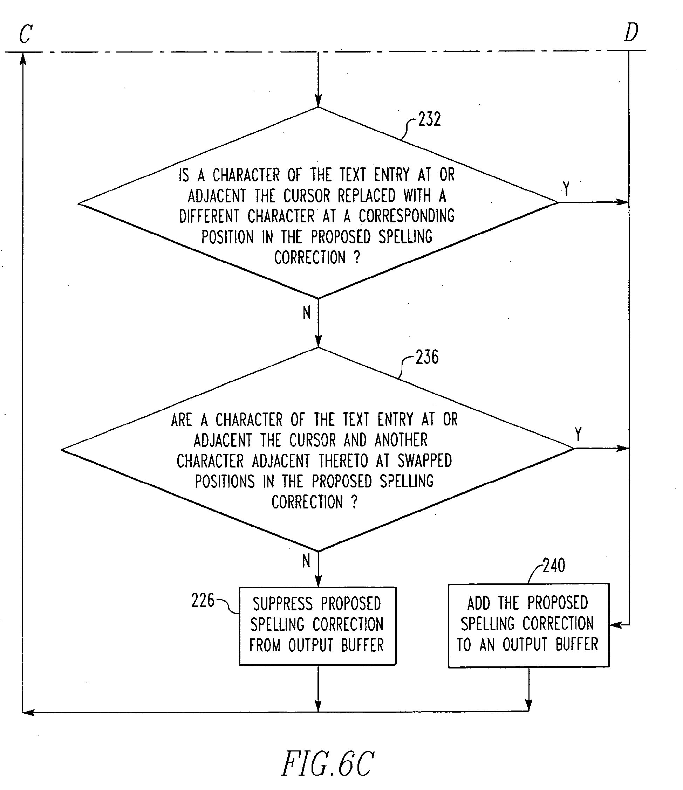

If at 212 it is determined that the cursor 48 or 148 is, in fact, at or adjacent a character 56 or 156 of a text entry 58 or 158 that is at least potentially misspelled, processing continues, as at 220, where it is determined whether any proposed spelling corrections are available to be evaluated for possible outputting on the display 18. If one or more spelling corrections are determined at 220 to be available for such evaluation for possible outputting, processing is passed to 224 in Fig. 6B where it is determined whether a character of the text entry at or adjacent the cursor is absent from a corresponding position in the proposed spelling correction. If yes, the proposed spelling correction is added, as at 240, to an output buffer, after which processing returns to 220. However, if the result at 224 is negative, processing continues, as at 228, where it is determined whether the proposed spelling correction comprises a character additional to the text entry and disposed at a position in the proposed spelling correction that corresponds with being at or adjacent the cursor in the text entry. If yes, the text entry is added, as at 240, to the output buffer. If not, processing continues, as at 232 in Fig. 6C, where it is determined whether a character of the text entry at or adjacent the cursor is replaced with a different character at a corresponding position in the proposed spelling correction. If so, the proposed spelling correction is added, as at 240, to the output buffer. If not, processing continues, as at 236, where it is determined whether a character of the text entry at or adjacent the cursor and another character adjacent thereto are at swapped positions in the proposed spelling correction. If so, the proposed spelling correction is added, as at 240, to the output buffer. If not, the proposed spelling correction is suppressed, as at 226, from the output buffer. Regardless of whether any given spelling correction is added to the output buffer, as at 240, or is suppressed from the output buffer as at 226, processing returns to 220 where it is determined whether any further proposed spelling corrections are available for evaluation according to the criteria at 224, 228, 232, and 236, for addition to the output buffer, as at 240, or for suppression from the output buffer, at 226. If it is determined, as at 220, that no further proposed spelling corrections are available for possible outputting, processing continues, as at 244, where all proposed spelling corrections 68 that are in the output buffer are output in a window 64 on the display 18.

In this regard, it is understood that other criteria than those example criteria depicted at 224, 228, 232, and 236 can be employed without departing from the present concept. It is also understood that the specific ordering of the criteria 224, 228, 232, and 236 can be altered without departing from the present concept.

It is additionally noted that the determination whether any given text entry 58 is at least potentially misspelled is not expressly depicted in Figs. 6A-6C, since, as set forth above, such a determination can occur at any of a variety of times depending upon the specific configuration of the mobile electronic device 4. As such, it is understood that the specific determination of whether any given text entry 58 is at least potentially misspelled is intended to be implicitly determined as necessary at any location in the flowchart of Figs. 6A-6C.

It is noted that additional benefits are provided by the input navigation device mentioned above. For instance, an example home screen output 1060 that can be visually output on the display 18 is depicted in Fig. 7 as including a plurality of icons 1062 that are selectable by the user for the purpose of, for example, initiating the execution on the processor apparatus 16 of a routine that is represented by an icon 1062. The track ball 32 is rotatable to provide, for example, navigational inputs among the icons 1062.

For example, Fig. 7 depicts the travel of an indicator 1066 from the icon 1062A, as is indicated in broken lines with the indicator 1066A, to the icon 1062B, as is indicated in broken lines with the indicator 1066B, and onward to the icon 1062C, as is indicated by the indicator 1066C. It is understood that the indicators 1066A, 1066B, and 1066C are not necessarily intended to be simultaneously depicted on the display 18, but rather are intended to together depict a series of situations and to indicate movement of the indicator 1066 among the icons 1062. The particular location of the indicator 1066 at any given time indicates to a user the particular icon 1062, for example, that is the subject of a selection focus of the mobile electronic device 4. Whenever an icon 1062 or other selectable object is the subject of the selection focus, a selection input to the processor apparatus 16 will result in execution or initiation of the routine or other function that is represented by the icon 1062 or other selectable object.

The movement of the indicator 1066 from the icon 1062A, as indicated with the indicator 1066A, to the icon 1062B, as is indicated by the indicator 1066B, was accomplished by rotating the track ball 32 about the vertical axis 34B to provide a horizontal navigational input. As mentioned above, a rotation of the track ball 32 a predetermined rotational distance results in an input to the processor apparatus 16. In the present example, the track ball 32 would have been rotated about the vertical axis 34B a rotational distance equal to three times the predetermined rotational distance since the icon 62B is disposed three icons 1062 to the right the icon 1062A. Such rotation of the track ball 32 likely would have been made in a single motion by the user, but this need not necessarily be the case.

Similarly, the movement of the indicator 1066 from the icon 1062B, as indicated by the indicator 1066B, to the icon 1062C, as is indicated by the indicator 1066C, was accomplished by the user rotating the track ball 32 about the horizontal axis 34A to provide a vertical navigational input. In so doing, the track ball 32 would have been rotated a rotational distance equal to two times the predetermined rotational distance since the icon 1062C is disposed two icons 1062 below the icon 1062B. Such rotation of the track ball 32 likely would have been made in a single motion by the user, but this need not necessarily be the case.

It thus can be seen that the track ball 32 is rotatable in various directions to provide various navigational and other inputs to the processor apparatus 16. Rotational inputs by the track ball 32 typically are interpreted by whichever routine is active on the mobile electronic device 4 as inputs that can be employed by such routine. For example, the GUI 46 that is active on the mobile electronic device 4 in Fig. 7 requires vertical and horizontal navigational inputs to move the indicator 1066, and thus the selection focus, among the icons 1062. If a user rotated the track ball 32 about an axis oblique to the horizontal axis 34A and the vertical axis 34B, the GUI 46 likely would resolve such an oblique rotation of the track ball 32 into vertical and horizontal components which could then be interpreted by the GUI 46 as vertical and horizontal navigational movements, respectively. In such a situation, if one of the resolved vertical and horizontal navigational movements is of a greater magnitude than the other, the resolved navigational movement having the greater magnitude would be employed by the GUI 46 as a navigational input in that direction to move the indicator 1066 and the selection focus, and the other resolved navigational movement would be ignored by the GUI 46, for example.

When the indicator 1066 is disposed on the icon 1062C, as is indicated by the indicator 1066C, the selection focus of the mobile electronic device 4 is on the icon 1062C. As such, a translation of the track ball 32 toward the housing 6 as described above would provide an input to the processor apparatus 16 that would be interpreted by the GUI 46 as a selection input with respect to the icon 1062C. In response to such a selection input, the processor apparatus 16 would, for example, begin to execute a routine that is represented by the icon 1062C. It thus can be understood that the track ball 32 is rotatable to provide navigational and other inputs in multiple directions, assuming that the routine that is currently active on the mobile electronic device 4 can employ such navigational or other inputs in a plurality of directions, and can also be translated to provide a selection input or other input.

As mentioned above, Fig. 8 depicts an example menu 1035A that would be appropriate if the user's current logical location within the logical menu tree was viewing an email within an email routine. That is, the menu 1035A provides selectable options that would be appropriate for a user given that the user is, for example, viewing an email within an email routine. In a similar fashion, Fig. 9 depicts another example menu 1035B-that would be depicted if the user's current logical location within the logical menu tree was within a telephone routine.

Rotational movement inputs from the track ball 32 could be employed to navigate among, for example, the menus 1035A and 1035B. For instance, after an actuation of the <MENU> key 33 and an outputting by the GUI 46 of a resultant menu, the user could rotate the track ball 32 to provide scrolling inputs to successively highlight the various selectable options within the menu. Once the desired selectable option is highlighted, i.e., is the subject of the selection focus, the user could translate the track ball 32 toward the housing 6 to provide a selection input as to the highlighted selectable option. In this regard, it is noted that the <MENU> key 33 is advantageously disposed adjacent the track ball 32. This enables, for instance, the generation of a menu by an actuation the <MENU> key 33, conveniently followed by a rotation the track ball 32 to highlight a desired selectable option, for instance, followed by a translation of the track ball 32 toward the housing 6 to provide a selection input to initiate the operation represented by the highlighted selectable option.

It is further noted that one of the additional inputs that can be provided by a translation of the track ball 32 is an input that causes the GUI 46 to output a reduced menu. For instance, a translation of the track ball 32 toward the housing 6 could result in the generation and output of a more limited version of a menu than would have been generated if the <MENU> key 33 had instead been actuated. Such a reduced menu would therefore be appropriate to the user's current logical location within the logical menu tree and would provide those selectable options which the user would have a high likelihood of selecting. Rotational movements of the track ball 32 could provide scrolling inputs to scroll among the selectable options within the reduced menu 1035C, and translation movements of the track ball 32 could provide selection inputs to initiate whatever function is represented by the selectable option within the reduce menu 1035C that is currently highlighted.

By way of example, if instead of actuating the <MENU> key 33 to generate the menu 1035A the user translated the track ball 32, the GUI 46 would generate and output on the display the reduced menu 1035C that is depicted generally in Fig. 10. The example reduced menu 1035C provides as selectable options a number of the selectable options from the menu 1035A that the user would be most likely to select. As such, a user seeking to perform a relatively routine function could, instead of actuating the <MENU> key 33 to display the full menu 1035A, translate the track ball 32 to -generate and output the reduced menu 1035C. The user could then conveniently rotate the track ball 32 to provide scrolling inputs to highlight a desired selectable option, and could then translate the track ball 32 to provide a selection input which would initiate the function represented by the selectable option in the reduced menu 1035C that is currently highlighted.

In the present example, many of the menus that could be generated as a result of an actuation of the <MENU> key 33 could instead be generated and output in reduced form as a reduced menu in response to a translation of the track ball 32 toward the housing 6. It is noted, however, that a reduced menu might not be available for each full menu that could be generated from an actuation of the <MENU> key 33. Depending upon the user's specific logical location within the logical menu tree, a translation of the track ball 32 might be interpreted as a selection input rather than an input seeking a reduced menu. For instance, a translation of the track ball 32 on the home screen depicted in Fig. 1 would result in a selection input as to whichever of the icons 1062 is the subject of the input focus. If the <MENU> key 33 was actuated on the home screen, the GUI 46 would output a menu appropriate to the home screen, such as a full menu of all of the functions that are available on the mobile electronic device 4, including those that might not be represented by icons 1062 on the home screen.

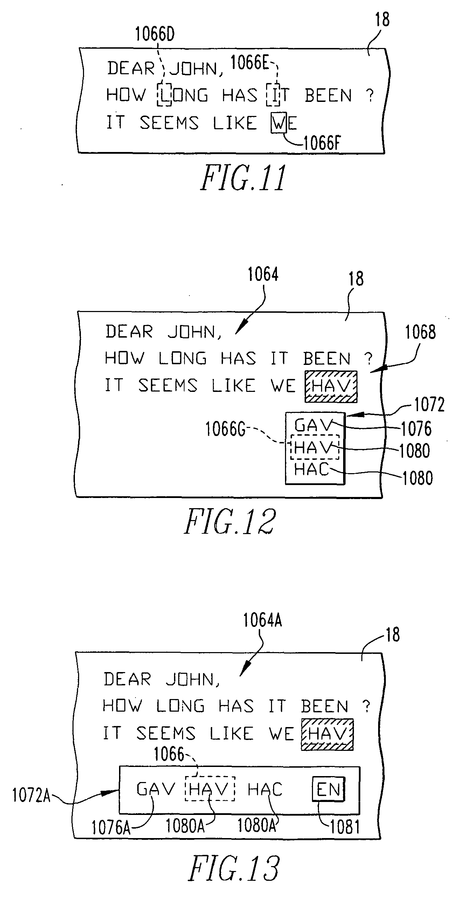

Fig. 11 depicts a quantity of text that is output on the display 18, such as during a text entry operation or during a text editing operation, for example. The indicator 1066 is depicted in Fig. 11 as being initially over the letter "L", as is indicated with the indicator 1066D, and having been moved horizontally to the letter "I", as is indicated by the indicator 1066E, and thereafter vertically moved to the letter "W", as is indicated by the indicator 1066F. In a fashion similar to that in Fig. 7, the cursor 1066 was moved among the letters "L", "I", and "W" through the use of horizontal and vertical navigational inputs resulting from rotations of the track ball 32. In the example of Fig. 11, however, each rotation of the track ball 32 the predetermined rotational distance would move the indicator 1066 to the next adjacent letter. As such, in moving the indicator 1066 between the letters "L" and "I," the user would have rotated the track ball 32 about the vertical axis 1034B a rotational distance equal to ten times the predetermined rotational distance, for example, since "I" is disposed ten letters to the right of "L".

Fig. 12 depicts an output 1064 on the display 18 during, for example, a text entry operation that employs the disambiguation routine 45. The output 1064 can be said to comprise a text component 1068 and a variant component 1072. The variant component 1072 comprises a default portion 1076 and a variant portion 1080. Fig. 12 depicts the indicator 1066G on the variant 1080 "HAV", such as would result from a rotation of the track ball 32 about the horizontal axis 34A to provide a downward vertical scrolling input. In this regard, it is understood that a rotation of the track ball 32 a distance equal to the predetermined rotational distance would have moved the indicator 1066 from a position (not expressly depicted herein) disposed on the default portion 1076 to the position disposed on the first variant 1080, as is depicted in Fig. 12. Since such a rotation of the track ball 32 resulted in the first variant 1080 "HAV" being highlighted with the indicator 1066G, the text component 1068 likewise includes the text "HAV" immediately preceding a cursor 1084A.

Fig. 13 depict an alternative output 1064A having an alternative variant component 1072A having a default portion 1076A and a variant portion 1080A. The variant component 1072A is horizontally arranged, meaning that the default portion 1076A and the variants 1080A are disposed horizontally adjacent one another and can be sequentially selected by the user through the use of horizontal scrolling inputs, such as by the user rotating the track ball 32 the predetermined rotational distance about the vertical axis 34B. This is to be contrasted with the variant component 1072 of Fig. 12 wherein the default portion 1076 and the variants 1080 are vertically arranged, and which can be sequentially selected by the user through the user of vertical scrolling inputs with the track ball 32.

In this regard, it can be understood that the track ball 32 can provide both the vertical scrolling inputs employed in conjunction with the output 1064 as well as the horizontal scrolling inputs employed in conjunction with the output 1064A. For instance, the disambiguation routine 45 potentially could allow the user to customize the operation thereof by electing between the vertically arranged variant component 1072 and the horizontally arranged variant component 1072A. The track ball 32 can provide scrolling inputs in the vertical direction and/or the horizontal direction, as needed, and thus is operable to provide appropriate scrolling inputs regardless of whether the user chooses the variant component 1072 or the variant component 1072A. That is, the track ball 32 can be rotated about the horizontal axis 34A to provide the vertical scrolling inputs employed in conjunction with the variant component 1072, and also can be rotated about the vertical axis 34B to provide the horizontal scrolling inputs that are employed in conjunction with the variant component 1064A. The track ball 32 thus could provide appropriate navigational, strolling, selection, and other inputs depending upon the needs of the routine active at any time on the mobile electronic device 4. The track ball 32 enables such navigational, strolling, selection, and other inputs to be intuitively generated by the user through rotations of the track ball 32 in directions appropriate to the active routine, such as might be indicated on the display 18.

It can further be seen from Fig. 13 that the variant component 1072A additionally includes a value 1081 that is indicative of the language into which the disambiguation routine 45 will interpret ambiguous text input. In the example depicted in Fig. 13, the language is English, as is the language in Fig. 1.

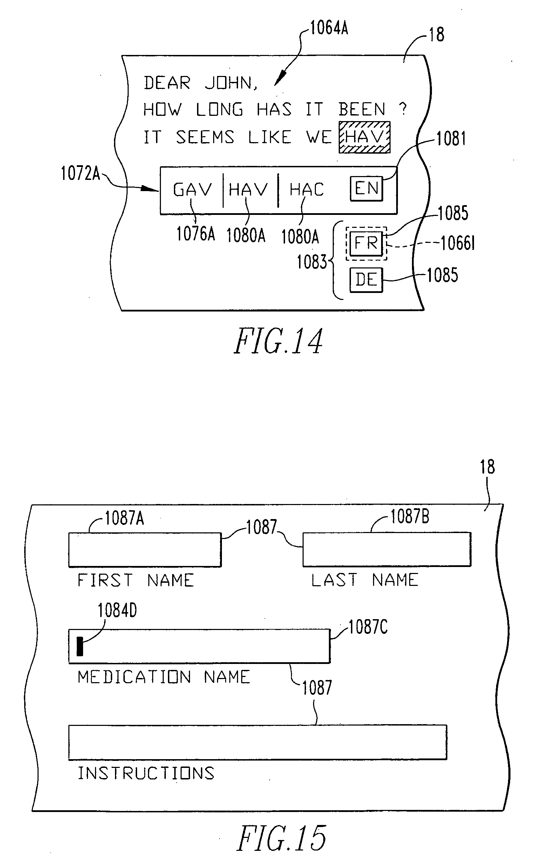

As can be seen in Fig. 14, the value 1081 can be selected by the user to cause the displaying of a list 1083 of alternative values 1085. The alternative values 1085 are indicative of selectable alternative languages into which the disambiguation routine 45 can interpret ambiguous input. A selection of the value 1081 would have been achieved, for example, by the user providing horizontal scrolling inputs with the track ball 32 to cause (not expressly depicted herein) the indicator 1066 to be disposed over the value 1081, and by thereafter translating the track ball 32 toward the housing 6 to provide a selection input.

The alternative values 1085 in the list 1083 are vertically arranged with respect to one another and with respect to the value 1081. As such, a vertical scrolling input with the track ball 32 can result in a vertical movement of the indicator 1066l to a position on one of the alternative values 1085 which, in the present example, is the alternative value 1085 "FR", which is representative of the French language and, more specifically, refers to the French dictionary of the dictionary 42. The alternative value 1085 "FR" could become selected by the user in any of a variety of fashions, such as by actuating the track ball 32 again, by continuing to enter text, or in other fashions. It thus can be understood from Fig. 13 and Fig. 14 that the track ball 32 can be rotated to provide horizontal scrolling inputs and, when appropriate, to additionally provide vertical scrolling inputs and, when appropriate, to additionally provide selection inputs, for example.

Fig. 15 depicts another example output on the display 18 such as might be employed by a data entry routine. The example output of Fig. 15 comprises a plurality of input fields 1087 with corresponding descriptions. A cursor 1084D, when disposed within one of the input fields 1087, indicates to the user that an input focus of the mobile electronic device 4 is on that input field 1087. That is, data such as text, numbers, symbols, and the like, will be entered into whichever input field 1087 is active, i.e., is the subject of the input focus. It is understood that the mobile electronic device 4 might perform other operations or take other actions depending upon which input field 1087 is the subject of the input focus.

Navigational inputs from the track ball 32 advantageously enable the cursor 1084D, and thus the input focus, to be switched, i.e., shifted, among the various input fields 1087. For example, the input fields 1087 could include the input fields 1087A, 1087B, and 1087C. Fig. 15 depicts the cursor 1084D as being disposed in the input field 1087C, indicating that the input field 1087C is the subject of the input focus of the mobile electronic device 4. It is understood that the cursor 1084D, and thus the input focus, can be shifted from the input field 1087C to the input field 1087A, which is disposed adjacent and vertically above the input field 1087C, by providing a vertical scrolling input in the upward direction with the track ball 32. That is, the track ball 32 would be rotated the predetermined rotational distance about the horizontal axis 34. Similarly, the cursor 1084D, and thus the input focus, can be shifted from the input field 1087A to the input field 1087B, which is disposed adjacent and to the right of the input field 1087A, by providing a horizontal scrolling input to the right with the track ball 32. That is, such a horizontal scrolling input could be provided by rotating the track ball the predetermined rotational distance about the vertical axis 34B. It thus can be seen that the track ball 32 is rotatable in a plurality of directions about a plurality axes to provide navigational, scrolling, and other inputs in a plurality of directions among a plurality of input fields 1087. Other types of inputs and/or inputs in other applications will be apparent.

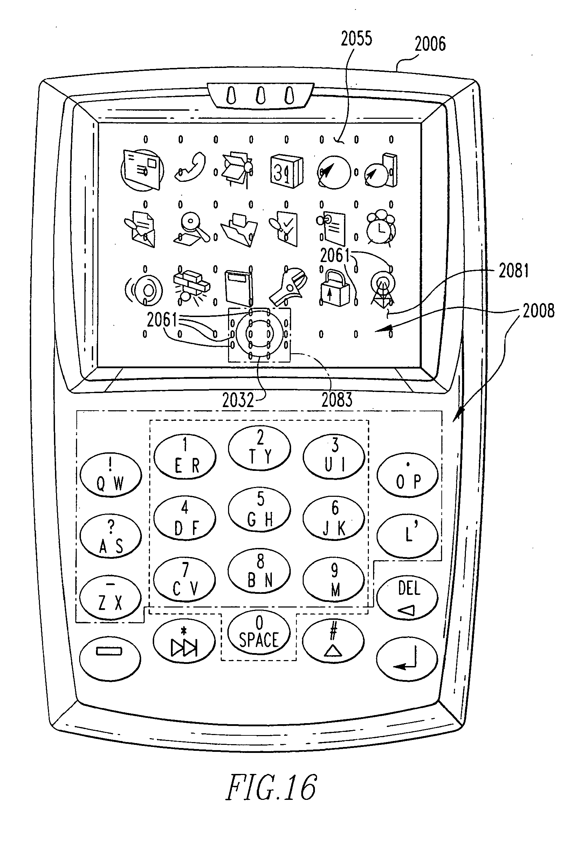

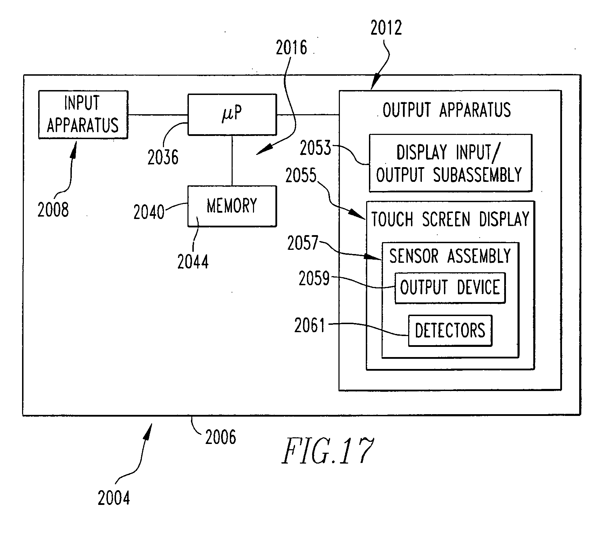

An improved mobile electronic device 2004 in accordance with still another embodiment of the disclosed and claimed concept is depicted generally in Fig. 16 and Fig. 17. The mobile electronic device 2004 includes a housing 2006 upon which are disposed an input apparatus 2008, an output apparatus 2012, and a processor apparatus 2016. The processor apparatus 2016 comprises a processor 2036 a memory 2040 having stored therein a number of routines 2044. All of the operations that can be performed on or with the mobile electronic device 4 can be performed on or with the mobile electronic device 2004. As such, the features of the mobile electronic device 2004 that are common with the mobile electronic device 4, and this would comprise essentially all of the features of the mobile electronic device 4, will generally not be repeated.

As a general matter, the mobile electronic device 2004 is substantially identical in configuration and function to the mobile electronic device 4, except that the mobile electronic device 2004 includes a touch screen display 2055 that provides a non-mechanical input navigation device 2032 instead of the track ball 32. The non-mechanical input navigation device 2032 can be said to be in the form of a virtual track ball 2032.

As is generally understood, the touch screen display 2055 includes a liquid crystal layer between a pair of substrates, with each substrate including an electrode. The electrodes form a grid which defines the aperture size of the pixels. When a charge is applied to the electrodes, the liquid crystal molecules of the liquid crystal layer become aligned generally perpendicular to the two substrates. A display input/output subassembly 2053 of the output apparatus 2012 controls the location of the charge applied to the electrodes thereby enabling the formation of images on the touch screen display 2055.

Additionally, the touch screen display 2055 comprises a sensor assembly 2057 which comprises an output device 2059 and a plurality of detectors 2061. The detectors 2061 are shown schematically and are typically too small to be seen by the naked eye. Each detector 2061 is in electrical communication with the output device 2059 and creates an output signal when actuated. The detectors 2061 are disposed in a pattern, discussed below, and are structured to detect an external object immediately adjacent to, or touching, the touch screen display 2055. The external object is typically a stylus or a user's finger (not shown). The output device 2059 and/or the processor 2016 are structured to receive the detector signals and convert the signals to data representing the location of the external object relative to the touch screen display 2055. As such, while the sensor assembly 2057 is physically a component of the touch screen display 2055, it is nevertheless considered to be a logical component of the input apparatus 2008 since it provides input to the processor apparatus.

The detectors 2061 are typically capacitive detectors, optical detectors, resistive detectors, or mechanical detectors such as strain gauge or charged grid, although other technologies may be employed without departing from the present concept. Typically, capacitive detectors are structured to detect a change in capacitance caused by the electrical field of the external object or a change in capacitance caused by the compression of the capacitive detector. Optical detectors are structured to detect a reflection of light, e.g., light created by the touch screen display 2055. Mechanical detectors include a charged grid with columns that would be disposed on one side of the touch screen display 2055 and a corresponding grid without columns would be disposed at another location on the touch screen display 2055. In such a configuration, when the touch screen display 2055 is compressed, i.e. as a result of being touched by the user, the columns at the area of compression contact the opposing grid thereby completing a circuit.

Capacitive detectors may be disposed upon either substrate and, although small, require space. Thus, and any pixel that is disposed adjacent a detector 2061 will have a reduced size, or aperture, to accommodate the adjacent detector 2061.

The detectors 2061 are disposed in a pattern, and at least some of the detectors 2061 preferably are arranged in lines that form a grid. A first portion of the detectors 2061 are disposed on a first area 2081 of the touch screen display 2055, and a second portion of the detectors 2061 are disposed on a second area 2083 of the touch screen display 2055. As can be seen from Fig. 16, the first area 2081 essentially is every region of the touch screen display 2005 other than the second area 2083.

The first portion of the detectors 2061 disposed on the first area 2081 of the touch screen display 2055 are disposed in a relatively sparse pattern in order to minimize the visual interference that is caused by the presence of the detectors 2061 adjacent the pixels. Preferably, the spacing of the detectors 2061 on the first area 2081 is between about 1.0 mm and 10.0 mm between the detectors 2061, and more preferably about 3.0 mm between the detectors 2061.

The second portion of the detectors 2061 are disposed in a relatively dense pattern on the second area 2083 of the touch screen display 2055 and are structured to support the function of the virtual track ball 2032. The image quality in the second area 2083 of the touch screen display 2055 is adversely affected due to the dense spacing of the detectors 2061 there. However, the second area 2083 is a relatively small area compared to the entire touch screen display 2055. Preferably, the density of the detectors 2061 in the second area 2083 is between about 0.05 mm and 3.0 mm between the detectors, and more preferably about 0.1 mm between the detectors 2061. Further, because the pixels in the second area 2083 are dedicated for the virtual track ball 2032, it is acceptable to have a reduced pixel density with larger pixels. Since the pixel size would be very large, the aspect ratio would be significantly higher than that of pixels that are not disposed adjacent a detector 2061. The pixels in the second area 2083 likely would be special function pixels, such as pixels that would both depict the virtual track ball 2032 and that would light up the second area 2083 to highlight the virtual track ball 2032.

The processor apparatus is structured to create images and define the boundaries of selectable portions of the images on the touch screen display 2055. For example, the processor apparatus will create the images of selectable icons or other objects on specific portions of the touch screen display 2055. The processor apparatus is further structured to relate specific detectors 2061 to the specific portions of the touch screen display 2055. Thus, when the processor apparatus detects the actuation of a specific detector 2061 adjacent to a specific image, e.g. a selectable icon, the processor apparatus will initiate the function or routine related to that icon, e.g. opening a calendar program.

Similarly, the processor apparatus is structured to employ specific detectors 2061 to support the function of the virtual track ball 2032 in the second area 2083 of the touch screen display 2055. Thus, actuations of one or more of the detectors 2061 that support the virtual track ball 2032 will be interpreted by the processor apparatus as being inputs from the virtual track ball 2032. For instance, an actuation of a sequential plurality of detectors 2061 extending along a particular direction on the touch screen display 2055 in the second area 2083 might be interpreted as a navigational input, a scrolling input, a selection input, and/or another input in the particular direction. Since the user can freely move a finger, for instance, in any direction on the touch screen display 2055, the virtual track ball 2032 is an input navigation device. Other inputs, such as a non-moving actuation of one or more detectors 2061 in the central region of the virtual track ball 2032 could be interpreted by the processor apparatus as an actuation input of the virtual track ball 2032, such as would be generated by an actuation of the track ball 32 of the mobile electronic device 1004 in a direction toward the housing 1006 thereof. It can be understood that other types of actuations of the detectors 2061 in the second area 2083 can be interpreted as various other inputs without departing from the disclosed and claimed concept.

The mobile electronic device 2004 thus comprises a input navigation device 2032 that is non-mechanical but that still provides the same functional features and advantages as, say, the track ball 32 of the mobile electronic device 4. It is understood that the virtual track ball 2032 is but one example of the many types of input navigation devices that could be employed on the mobile electronic device 2004.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A method on a mobile electronic device (4) of providing a number of proposed spelling corrections for a text entry (52) having a plurality of characters (56), the method comprising:
detecting a location of a cursor (48) at or adjacent at least one character of the text entry;
outputting a number of proposed spelling corrections (68, 168) each comprising a number of characters (56) and comprising a character difference from the text entry that is at least one of:
a character of the text entry at or adjacent the cursor being absent from a corresponding position in the proposed spelling correction,
the proposed spelling correction comprising a character additional to the text entry and disposed at a position in the proposed spelling correction that corresponds with being at or adjacent the cursor in the text entry,
a character of the text entry at or adjacent the cursor being replaced with a different character at a corresponding position in the proposed spelling correction, and
a character of the text entry at or adjacent the cursor and another character adjacent thereto in the text entry being at swapped positions in the proposed spelling correction.

2. The method of Claim 1, further comprising suppressing from the output any proposed spelling corrections that lack a character difference from the text entry that is at least one of:
a character of the text entry at or adjacent the cursor being absent from a corresponding position in the proposed spelling correction;
the proposed spelling correction comprising a character additional to the text entry and disposed at a position in the proposed spelling correction that corresponds with being at or adjacent the cursor in the text entry;
a character of the text entry at or adjacent the cursor being replaced with a different character at a corresponding position in the proposed spelling correction; and
a character of the text entry at or adjacent the cursor and another character adjacent thereto in the text entry being at swapped positions in the proposed spelling correction.

3. The method of Claim 2, further comprising:
subjecting the text entry to a spell checking routine (44);
identifying with the spell checking routine a plurality of proposed spelling corrections comprising a first proposed spelling correction and a second proposed spelling correction;
performing the suppressing as to the first proposed spelling correction responsive to a determination that the first proposed spelling correction lacks a character difference from the text entry that is at least one of:
a character of the text entry at or adjacent the cursor being absent from a corresponding position in the proposed spelling correction,
the proposed spelling correction comprising a character additional to the text entry and disposed at a position in the proposed spelling correction that corresponds with being at or adjacent the cursor in the text entry,
a character of the text entry at or adjacent the cursor being replaced with a different character at a corresponding position in the proposed spelling correction, and
a character of the text entry at or adjacent the cursor and another character adjacent thereto in the text entry being at swapped positions in the proposed spelling correction; and
performing the outputting of the second proposed spelling correction responsive to a determination that the second proposed spelling correction comprises a character difference from the text entry that is at least one of:
a character of the text entry at or adjacent the cursor being absent from a corresponding position in the proposed spelling correction,
the proposed spelling correction comprising a character additional to the text entry and disposed at a position in the proposed spelling correction that corresponds with being at or adjacent the cursor in the text entry,
a character of the text entry at or adjacent the cursor being replaced with a different character at a corresponding position in the proposed spelling correction, and
a character of the text entry at or adjacent the cursor and another character adjacent thereto in the text entry being at swapped positions in the proposed spelling correction.

4. The method of any of Claims 1 to 3, further comprising:
detecting a movement input that moves the cursor to the location at or adjacent the at least one character of the text entry;
detecting a predetermined input subsequent to the detecting of the movement input; and
responsive to the detecting of the predetermined input, initiating the outputting of the number of proposed spelling corrections.

5. The method of Claim 4, further comprising detecting as the predetermined input one of:
an input from a predetermined input element (28, 32) of an input apparatus (8) of the mobile electronic device, and
an expiration of a predetermined period of time without a detection of another input from the input apparatus.

6. The method of any of Claims 1 to 5, further comprising:
subjecting the text entry to a spell checking routine (44);
identifying with the spell checking routine a plurality of proposed spelling corrections each having an edit distance of one from the text entry; and
outputting as the number of proposed spelling corrections fewer than all of the plurality of proposed spelling corrections.

7. A mobile electronic device (4) structured to provide a number of proposed spelling corrections for a text entry (52) having a plurality of characters (56), the mobile electronic device comprising:
a processor apparatus (16) comprising a processor (36) and a memory (40);
an input apparatus (8) structured to provide input to the processor apparatus;
an output apparatus (12) structured to receive output signals from the processor;
the memory having stored therein one or more routines which, when executed on the processor, cause the mobile electronic device to perform operations comprising:
detecting a location of a cursor (48) at or adjacent at least one character of the text entry;
outputting a number of proposed spelling corrections (68, 168) each comprising a number of characters (56) and comprising a character difference from the text entry that is at least one of:
a character of the text entry at or adjacent the cursor being absent from a corresponding position in the proposed spelling correction,
the proposed spelling correction comprising a character additional to the text entry and disposed at a position in the proposed spelling correction that corresponds with being at or adjacent the cursor in the text entry,
a character of the text entry at or adjacent the cursor being replaced with a different character at a corresponding position in the proposed spelling correction, and
a character of the text entry at or adjacent the cursor and another character adjacent thereto in the text entry being at swapped positions in the proposed spelling correction.

8. The mobile electronic device of Claim 7 wherein the operations further comprise suppressing from the output any proposed spelling corrections that lack a character difference from the text entry that is at least one of:
a character of the text entry at or adjacent the cursor being absent from a corresponding position in the proposed spelling correction;
the proposed spelling correction comprising a character additional to the text entry and disposed at a position in the proposed spelling correction that corresponds with being at or adjacent the cursor in the text entry;
a character of the text entry at or adjacent the cursor being replaced with a different character at a corresponding position in the proposed spelling correction; and
a character of the text entry at or adjacent the cursor and another character adjacent thereto in the text entry being at swapped positions in the proposed spelling correction.

9. The mobile electronic device of Claim 8 wherein the operations further comprise:
subjecting the text entry to a spell checking routine (44);
identifying with the spell checking routine a plurality of proposed spelling corrections comprising a first proposed spelling correction and a second proposed spelling correction;
performing the suppressing as to the first proposed spelling correction responsive to a determination that the first proposed spelling correction lacks a character difference from the text entry that is at least one of:
a character of the text entry at or adjacent the cursor being absent from a corresponding position in the proposed spelling correction,
the proposed spelling correction comprising a character additional to the text entry and disposed at a position in the proposed spelling correction that corresponds with being at or adjacent the cursor in the text entry,
a character of the text entry at or adjacent the cursor being replaced with a different character at a corresponding position in the proposed spelling correction, and
a character of the text entry at or adjacent the cursor and another character adjacent thereto in the text entry being at swapped positions in the proposed spelling correction; and
performing the outputting of the second proposed spelling correction responsive to a determination that the second proposed spelling correction comprises a character difference from the text entry that is at least one of:
a character of the text entry at or adjacent the cursor being absent from a corresponding position in the proposed spelling correction,
the proposed spelling correction comprising a character additional to the text entry and disposed at a position in the proposed spelling correction that corresponds with being at or adjacent the cursor in the text entry,
a character of the text entry at or adjacent the cursor being replaced with a different character at a corresponding position in the proposed spelling correction, and
a character of the text entry at or adjacent the cursor and another character adjacent thereto in the text entry being at swapped positions in the proposed spelling correction.

10. The mobile electronic device of any of Claims 7 to 9 wherein the operations further comprise:
detecting a movement input that moves the cursor to the location at or adjacent the at least one character of the text entry;
detecting a predetermined input subsequent to the detecting of the movement input; and
responsive to the detecting of the predetermined input, initiating the outputting of the number of proposed spelling corrections.

11. The mobile electronic device of Claim 10 wherein the operations further comprise detecting as the predetermined input one of:
an input from a predetermined input element (28, 32) of an input apparatus (8) of the mobile electronic device, and
an expiration of a predetermined period of time without a detection of another input from the input apparatus.

12. The mobile electronic device of any of Claims 7 to 11 wherein the operations further comprise:
subjecting the text entry to a spell checking routine (44);
identifying with the spell checking routine a plurality of proposed spelling corrections each having an edit distance of one from the text entry; and
outputting as the number of proposed spelling corrections fewer than all of the plurality of proposed spelling corrections.

13. A machine readable storage medium (40) comprising one or more routines which, when executed on a processor (36) of a mobile electronic device (4) that is capable of providing a number of proposed spelling corrections for a text entry (52) having a plurality of characters (56), causes the mobile electronic device to perform operations comprising:
detecting a location of a cursor (48) at or adjacent at least one character of the text entry;
outputting a number of proposed spelling corrections (68, 168) each comprising a number of characters (56) and comprising a character difference from the text entry that is at least one of:
a character of the text entry at or adjacent the cursor being absent from a corresponding position in the proposed spelling correction,
the proposed spelling correction comprising a character additional to the text entry and disposed at a position in the proposed spelling correction that corresponds with being at or adjacent the cursor in the text entry,
a character of the text entry at or adjacent the cursor being replaced with a different character at a corresponding position in the proposed spelling correction, and
a character of the text entry at or adjacent the cursor and another character adjacent thereto in the text entry being at swapped positions in the proposed spelling correction.

14. The machine readable storage medium of Claim 13 wherein the operations further comprise suppressing from the output any proposed spelling corrections that lack a character difference from the text entry that is at least one of:
a character of the text entry at or adjacent the cursor being absent from a corresponding position in the proposed spelling correction;
the proposed spelling correction comprising a character additional to the text entry and disposed at a position in the proposed spelling correction that corresponds with being at or adjacent the cursor in the text entry;
a character of the text entry at or adjacent the cursor being replaced with a different character at a corresponding position in the proposed spelling correction; and
a character of the text entry at or adjacent the cursor and another character adjacent thereto in the text entry being at swapped positions in the proposed spelling correction.

15. The machine readable storage medium of Claim 14 wherein the operations further comprise:
subjecting the text entry to a spell checking routine (44);
identifying with the spell checking routine a plurality of proposed spelling corrections comprising a first proposed spelling correction and a second proposed spelling correction;
performing the suppressing as to the first proposed spelling correction responsive to a determination that the first proposed spelling correction lacks a character difference from the text entry that is at least one of:
a character of the text entry at or adjacent the cursor being absent from a corresponding position in the proposed spelling correction,
the proposed spelling correction comprising a character additional to the text entry and disposed at a position in the proposed spelling correction that corresponds with being at or adjacent the cursor in the text entry,
a character of the text entry at or adjacent the cursor being replaced with a different character at a corresponding position in the proposed spelling correction, and
a character of the text entry at or adjacent the cursor and another character adjacent thereto in the text entry being at swapped positions in the proposed spelling correction; and
performing the outputting of the second proposed spelling correction responsive to a determination that the second proposed spelling correction comprises a character difference from the text entry that is at least one of:
a character of the text entry at or adjacent the cursor being absent from a corresponding position in the proposed spelling correction,
the proposed spelling correction comprising a character additional to the text entry and disposed at a position in the proposed spelling correction that corresponds with being at or adjacent the cursor in the text entry,
a character of the text entry at or adjacent the cursor being replaced with a different character at a corresponding position in the proposed spelling correction, and
a character of the text entry at or adjacent the cursor and another character adjacent thereto in the text entry being at swapped positions in the proposed spelling correction.

16. The machine readable storage medium of any of Claims 13 to 15 wherein the operations further comprise:
detecting a movement input that moves the cursor to the location at or adjacent the at least one character of the text entry;
detecting a predetermined input subsequent to the detecting of the movement input; and
responsive to the detecting of the predetermined input, initiating the outputting of the number of proposed spelling corrections.

17. The machine readable storage medium of Claim 16 wherein the operations further comprise detecting as the predetermined input one of:
an input from a predetermined input element (28, 32) of an input apparatus (8) of the mobile electronic device, and
an expiration of a predetermined period of time without a detection of another input from the input apparatus.

18. The machine readable storage medium of any of Claims 13 to 17 wherein the operations further comprise:
subjecting the text entry to a spell checking routine (44);
identifying with the spell checking routine a plurality of proposed spelling corrections each having an edit distance of one from the text entry; and
outputting as the number of proposed spelling corrections fewer than all of the plurality of proposed spelling corrections.

## Patentansprüche

1. Verfahren auf einer mobilen elektronischen Vorrichtung (4) zum Vorsehen einer Anzahl von vorgeschlagenen Rechtschreibkorrekturen für eine Texteingabe (52) mit einer Vielzahl von Zeichen (56), wobei das Verfahren aufweist:
Erfassen einer Position eines Cursors (48) an oder neben zumindest einem Zeichen der Texteingabe;
Ausgeben einer Anzahl von vorgeschlagenen Rechtschreibkorrekturen (68, 168), die jeweils eine Anzahl von Zeichen (56) aufweisen und einen Zeichen unterschied zu der Texteingabe aufweisen, der zumindest eines ist aus:
ein Zeichen der Texteingabe an oder neben dem Cursor fehlt an einer entsprechenden Position in der vorgeschlagenen Rechtschreibkorrektur,
die vorgeschlagene Rechtschreibkorrektur weist ein Zeichen auf, das zusätzlich zu der Texteingabe ist und an Position in der vorgeschlagenen Rechtschreibkorrektur angeordnet ist, die an oder neben Cursor in der Texteingabe entspricht,
ein Zeichen der Texteingabe an oder neben dem Cursor ist durch ein anderes Zeichen an einer entsprechenden Position in der vorgeschlagenen Rechtschreibkorrektur ersetzt, und
ein Zeichen der Texteingabe an oder neben dem Cursor und ein anZeichen angrenzend dazu in der Texteingabe sind an vertauschten Positionen in der vorgeschlagenen Rechtschreibkorrektur.

2. Verfahren Anspruch 1, das weiter aufweist ein Unterdrücken von vorgeschlagenen Rechtschreibkorrekturen von der Ausgabe, denen ein Zeichen unterschied zu der Texteingabe fehlt, der zumindest eines ist a us:
ein Zeichen der Texteingabe an oder neben dem Cursor fehlt an einer entsprechenden Position in der vorgeschlagenen Rechtschreibkorrektur;
die vorgeschlagene Rechtschreibkorrektur weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht;
ein Zeichen der Texteingabe an oder neben dem Cursor ist durch ein anderes Zeichen an entsprechenden Position in der vorgeschlagenen Rechtschreibkorrektur ersetzt; und
ein Zeichen der Texteingabe an neben dem Cursor und ein anderes Zeichen angrenzend dazu in der Texteingabe sind an vertauschen Positionen in der vorgeschlagenen Rechtschreibkorrektur.

3. Verfahren gemäß Anspruch 2, das weiter aufweist:
Unterziehen der Texteingabe einer Rechtschreibprüfroutine (44);
Identifizieren mit der Rechtschreibprüfroutine einer Vielzahl von vorgeschlagenen Rechtschreibkorrekturen, die eine erste vorgeschlagene Rechtschreibkorrektur und eine vorgeschlagene Rechtschreibkorrektur aufweisen;
Durchführen des Unterdrücken hinsichtlich der ersten vorgeschlagenen Rechtschreibkorrektur in Reaktion auf eine Bestimmung, der ersten vorgeschlagenen Rechtschreibkorrektur ein Zeichenunterschied zu der Texteingabe fehlt, der zumindest eines ist aus:
ein Zeichen der Texteingabe an oder neben Cursor fehlt an einer entsprechenden Position in der vorgeschlagenen Rechtschreibkorrektur,
die vorgeschlagene Rechtschreibkorrektur weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht,
ein Zeichen der Texteingabe an oder neben dem Cursor ist durch ein Zeichen an einer entsprechenden Position in der vorgeschlagenen Rechtschreibkorrektur ersetzt, und
ein Zeichen der Texteingabe an oder neben dem Cursor und ein anderes Zeichen angrenzend dazu in der Texteingabe sind an vertauschten Positionen in der vorgeschlagenen Rechtschreibkorrektur; und
Durchführen der Ausgabe der zweiten vorgeschlagenen Rechtschreibkorrektur in Reaktion auf eine Bestimmung, dass die zweite vorgeschlagene Rechtschreibkorrektur einen Zeichenunterschied zu der Texteingabe aufweist, der zumindest eines ist aus:
ein Zeichen der Texteingabe an oder neben dem Cursor fehlt an einer entsprechenden Position in der vorgeschlagenen Rechtschreibkorrektur,
die vorgeschlagene Rechtschreibkorrektur weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht,
ein Zeichen der Texteingabe an oder neben dem Cursor ist durch ein Zeichen an einer entsprechenden Position in der vorgeschlagenen Rechtschreibkorrektur ersetzt, und
ein Zeichen der Texteingabe an oder neben dem Cursor und ein anderes Zeichen angrenzend dazu in der Texteingabe sind an vertauschten Positionen in der vorgeschlagenen Rechtschreibkorrektur.

4. Verfahren gemäß einem der Ansprüche 1 bis 3, das weiter aufweist:
Erfassen einer Bewegungseingabe, die den Cursor an die Stelle an oder neben das zumindest eine Zeichen der Texteingabe bewegt;
Erfassen einer vorgegebenen Eingabe nachfolgend auf das Erfassen der Bewegungseingabe; und
in Reaktion auf das Erfassen der vorgegebenen Eingabe, Initiieren der Ausgabe der Anzahl von vorgeschlagenen Rechtschreibkorrekturen.

5. Verfahren gemäß Anspruch 4, das weiter aufweist ein Erfassen als die vorgegebene Eingabe eines aus:
eine Eingabe von einem vorgegebenen Eingabeelement (28, 32) einer Eingabevorrichtung (8) der mobilen elektronischen Vorrichtung, und
ein Ablauf einer vorgegebenen Zeitdauer ohne eine Erfassung einer weiteren Eingabe von der Eingabevorrichtung.

6. Verfahren gemäß einem der Ansprüche 1 bis 5, das weiter aufweist:
Unterziehen der Texteingabe einer Rechtschreibprüfroutine (44);
identifizieren mit der Rechtschreibprüfroutine einer Vielzahl von vorgeschlagenen Rechtschreibkorrekturen, die jeweils eine Editier-Distanz von eins von der Texteingabe haben; und
Ausgeben, als die Anzahl von vorgeschlagenen Rechtschreibkorrekturen, von weniger als allen der Vielzah von vorgeschlagenen Rechtschreibkorrekturen.

7. Mobile elektronische Vorrichtung (4), die strukturiert ist, eine Anzahl von vorgeschlagenen Rechtschreibkorrekturen für eine Texteingabe (52) mit einer Vielzahl von Zeichen (56) vorzusehen, wobei die elektronische Vorrichtung aufweist:
Prozessorvorrichtung (16), die einen Prozessor (36) und einen Speicher (40) aufweist;
Eingabevorrichtung (8), die strukturiert ist, eine Eingabe an die Prozessorvorrichtung vorzusehen;
eine Ausgabevorrichtung (12), die strukturiert ist, Ausgabesignale von dem Prozessor zu empfanden;
wobei der Speicher eine oder mehrere Routine(n) gespeichert hat, die bei Ausführung auf dem Prozessor die mobile elektronische Vorrichtung veranlasst/veranlassen, Operationen durchzuführen, die aufweisen:
Erfassen einer Position eines Cursors (48) an oder neben zumindest einem Zeichen der Texteingabe;
Ausgeben einer Anzahl von vorgeschlagenen Rechtschreibkorrekturen (68, 168), die jeweils eine Anzahl von Zeichen (56) aufweisen und einen Zeichenunterschied zu der Texteingabe aufweisen, der zumindest eines ist aus:
ein Zeichen der Texteingabe an oder neben dem Cursor fehlt an einer entsprechenden Position in der vorgeschlagenen Rechtschreibkorrektu r,
die vorgeschlagene Rechtschreibkorrektur weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht,
ein Zeichen der Texteingabe an oder neben dem Cursor ist durch ein anderes Zeichen an einer entsprechenden Position in der vorgeschlagenen Rechtschreibkorrektur ersetzt, und
ein Zeichen der Texteingabe an oder neben dem Cursor und ein anderes Zeichen angrenzend dazu in der Texteingabe sind an vertauschten Positionen in der vorgeschlagenen Rechtschreibkorrektur.

8. elektronische Vorrichtung gemäß Anspruch 7, wobei die Operationen weiter aufweisen ein Unterdrücken von vorgeschlagenen Rechtschreibkorrekturen von der Ausgabe, denen ein Zeichenunterschied zu der Texteingabe fehlt, der zumindest eines ist aus:
ein Zeichen der Texteingabe an oder neben dem Cursor fehlt an einer entsprechenden Position in der vorgeschlagenen Rechtschreibkorrektur;
die vorgeschlagene Rechtschreibkorrektur weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht;
ein Zeichen der Texteingabe an oder neben dem Cursor ist durch ein anderes Zeichen an einer entsprechenden Position in der vorgeschlagenen Rechtschreibkorrektur ersetzt; und
ein Zeichen der Texteingabe an oder neben dem Cursor und ein anderes Zeichen angrenzend dazu in der Texteingabe sind an vertauschen Positionnen in der vorgeschlagenen Rechtschreibkorrektur.

9. Mobile elektronische Vorrichtung gemäß Anspruch 8, wobei die Operationen weiter aufweisen:
Unterziehen der Texteingabe einer Rechtschreibprüfroutine (44);
identifizieren mit der Rechtschreibprüfroutine einer Vielzahl von vorgeschlagenen Rechtschreibkorrekturen, die eine vorgeschlagene Riechtschreibkorrektur und eine zweite vorgeschlagene Rechtschreibkorrektur aufweisen;
Durchführen des Unterdrückens hinsichtlich der vorgeschlagenen Rechtschreibkorrektur in Reaktion auf Bestimmung, dass der ersten vorgeschlagenen Rechtschreibkorrektur ein Zeichenunterschied zu der Texteingabe fehlt, der zumindest eines ist aus:
ein Zeichen der Texteingabe an oder neben dem Cursor fehlt an einer entsprechenden Position in der vorgeschlagenen Rechtschreibkorrektur,
die vorgeschlagene Rechtschreibkorrektur weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht,
ein Zeichen der Texteingabe an oder neben dem Cursor ist durch ein anderes Zeichen an einer entsprechenden Position in der vorgeschlagenen Rechtschreibkorrektur ersetzt, und
ein Zeichen der Texteingabe an oder neben dem Cursor und ein anderes Zeichen angrenzend dazu in der Texteingabe sind an vertauschten Positionen in der vorgeschlagenen Rechtschreibkorrektur; und
Durchführen der Ausgabe der zweiten vorgeschlagenen Rechtschreibkorrektur in Reaktion auf eine Bestimmung, dass die zweite vorgeschlagene Rechtschreibkorrektur einen Zeichenunterschied zu der Texteingabe aufweist, der zumindest eines ist aus:
ein Zeichen der Texteingabe an oder neben dem Cursor fehlt an einer entsprechenden Position in der vorgeschlagenen Rechtschreibkorrektur,
die vorgeschlagene Rechtschreibkorrektu weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht,
ein Zeichen der Texteingabe an oder neben dem Cursor ist durch ein anderes Zeichen an einer entsprechenden Position in der vorgeschlagenen Rechtschreibkorrektur ersetzt, und
ein Zeichen der Texteingabe an oder neben dem Cursor und ein anderes Zeichen angrenzend dazu in der Texteingabe sind an vertauschten Positionen in der vorgeschlagenen Rechtschreibkorrektur.

10. Mobile elektronische Vorrichtung gemäß einem der Ansprüche 7 bis 9, wobei die Operationen weiter aufweisen:
Erfassen einer Bewegungseingabe, die den Cursor an die Stelle an oder neben das zumindest eine Zeichen der Texteingabe bewegt;
Erfassen vorgegebenen Eingabe nachfolgend auf das Erfassen der Bewegungseingabe; und
in Reaktion auf das Erfassen der vorgegebenen Eingabe, initiieren der Ausgabe der Anzahl von vorgeschlagenen Rechtschreibkorrekturen.

11. Mobile elektronische Vorrichtung gemäß Anspruch 10, wobei die Operationen weiter aufweisen ein Erfassen als die vorgegebene Eingabe eines aus:
eine Eingabe von einem vorgegebenen Eingabeelement (28, 32) einer Eingabevorrichtung (8) der mobilen elektronischen Vorrichtung, und
ein Ablauf einer vorgegebenen Zeitdauer ohne eine Erfassung einer weiteren Eingabe von der Eingabevorrichtung.

12. Mobile elektronische Vorrichtung gemäß einem der Ansprüche 7 bis 11, wobei die Operationen weiter aufweisen:
Unterziehen der Texteingabe einer Rechtschreibprüfroutine (44);
Identifizieren mit der Rechtschreibprüfroutine einer Vielzahl von vorgeschlagenen Rechtschreibkorrekturen, die jeweils eine Editier-Distanz von eins von der Texteingabe haben; und
Ausgeben, als die Anzahl von vorgeschlagenen Rechtschreibkorrekturen, von weniger als allen der Vielzahl von vorgeschlagenen Rechtschreibkorrekturen.

13. Maschinenlesbares Speichermedium (40), das eine oder mehrere Routine(n) aufweist, die bei Ausführung auf einem Prozessor (36) einer mobilen elektronischen Vorrichtung (4), die eine Anzahl von vorgeschlagenen Rechtschreibkorrekturen für Texteingabe (52) mit einer Vielzahl von Zeichen (56) vorsehen kann, die mobile Vorrichtung veranlasst/veranlassen, Operationen durchzuführen, die aufweisen:
Erfassen einer Position eines Cursors (48) an oder neben zumindest einem Zeichen der Texteingabe;
Ausgeben einer Anzahl von vorgeschlagene Rechtschreibkorrekturen (68, 168), die jeweils eine Anzahl von Zeichen (56) aufweisen und einen Zeichenunterschied zu der Texteingabe aufweisen, der zumindest eines ist aus:
ein Zeichen der Texteingabe an oder neben dem Cursor fehlt an einer entsprechenden Position in der vorgeschlagenen Rechtschreibkorrektur,
die vorgeschlagene Rechtschreibkorrektur weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht,
ein Zeichen der Texteingabe an oder neben dem Cursor ist durch ein anderes Zeichen an einer Position in der vorgeschlagenen Rechtschreibkorrektur ersetzt, und
ein Zeichen der Texteingabe an oder neben dem Cursor und ein anderes Zeichen angrenzend dazu in der Texteingabe sind an vertauschen Positionen in der vorgeschlagenen Rechtschreibkorrektur.

14. Maschinenlesbares speichermedium gemäß Anspruch 13, wobei die Operationen weiter aufweisen ein Unterdrücken von vorgeschlagenen Rechtschreibkorrekturen von der Ausgabe, denen ein Zeichenunterschied zu der Texteingabe fehlt, der zumindest eines ist aus:
ein Zeichen der Texteingabe an oder neben dem Cursor fehlt an einer entsprechenden Position in der vorgeschlagenen Rechtschreibkorrektur;
die vorgeschlagene Rechtschreibkorrektur weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht;
ein Zeichen der Texteingabe an oder neben dem Cursor ist durch ein anderes Zeichen an einer entsprechenden Position in der vorgeschlagenen Rechtschreibkorrektur ersetzt; und
ein Zeichen der Texteingabe an oder neben dem Cursor und ein anderes Zeichen angrenzend dazu in der Texteingabe sind an vertauschten Positionen in der vorgeschlagenen Rechtschreibkorrektur.

15. Speichermedium gemäß Anspruch 14, wobei die Operationen weiter aufweisen:
Unterziehen der Texteingabe einer Rechtschreibprüfroutine (44);
Identifizieren mit der Rechtschreibprüfroutine einer Vielzahl von vorgeschlagenen Rechtschreibkorrekturen, die eine erste vorgeschlagene Rechtschreibkorrektur und eine zweite vorgeschlagene Rechtschreibkorrektur aufweisen;
Durchführen des Unterdrückens hinsichtlich der ersten vorgeschlagenen Rechtschreibkorrektur in Reaktion auf eine Bestimmung, dass der ersten vorgeschlagenen Rechtschreibkorrektur ein Zeichenunterschied zu der Texteingabe fehlt, der zumindest eines ist aus:
ein Zeichen der Texteingabe an oder neben dem Cursor fehlt an einer entsprechenden Position in der vorgeschlagenen Rechtschreibkorrektut,
die vorgeschlagene Rechtschreibkorrektur weist ein Zeichen auf, das zusätzlich zu der Texteingabe ist und an einer Position in der vorgeschlagenen Rechtschreibkorrektur angeordnet ist, die an oder neben dem Cursor in der Texteingabe entspricht,
ein Zeichen der Texteingabe an oder neben dem Cursor ist durch ein anderes Zeichen an einer entsprechenden Position in der vorgeschlagenen Rechtschreibkorrektur ersetzt, und
ein Zeichen der Texteingabe an oder neben dem Cursor und ein anderes Zeichen angrenzend dazu in der Texteingabe sind an vertauschten Positionen in der vorgeschlagenen Rechtschreibkorrektur; und
Durchführen der Ausgabe der zweiten vorgeschlagenen Rechtschreibkorrektur in Reaktion auf eine Bestimmung, dass die zweite vorgeschlagene Rechtschreibkorrektur einen Zeichenunterschied zu der Texteingabe aufweist, der zumindest eines ist aus:
ein Zeichen der Texteingabe an oder neben dem Cursor fehlt an einer entsprechenden Position in der vorgeschlagenen Rechtschreibkorrektur,
die vorgeschlagene Rechtschreibkorrektur weist ein Zeichen auf, das zusätzlich zu der Texteingabe ist und an einer Position in dervorgeschlagenen Rechtschreibkorrektur angeordnet ist, die an oder neben dem Cursor in der Texteingabe entspricht,
ein Zeichen der Texteingabe an oder neben dem Cursor ist durch ein anderes Zeichen an einer entsprechenden Position in der vorgeschlagenen Rechtschreibkorrektur ersetzt, und
ein Zeichen der Texteingabe an oder neben dem Cursor und ein anderes Zeichen angrenzend dazu in der Texteingabe sind an vertauschen Positionen in der vorgeschlagenen Rechtschreibkorrektur.

16. Maschinenlesbares Speichermedium gemäß einem der Ansprüche 13 bis 15, wobei die Operationen weiter aufweisen:
Erfassen einer Bewegungseingabe, die den Cursor a n die Stelle an oder neben das zumindest eine Zeichen der Texteingabe bewegt;
Erfassen einer vorgegebenen Eingabe nachfolgend auf das Erfassen der Bewegungseingabe; und
in Reaktion auf das Erfassen der vorgegebenen Eingabe, initiieren der Ausgabe der Anzahl von vorgeschlagenen Rechtschreibkorrekturen.

17. Maschinenlesbares Speichermedium gemäß Anspruch 16, wobei die Operationen weiter aufweisen ein Erfassen als die vorgegebene Eingabe eines a us:
eine Eingabe von einem vorgegebenen Eingabeelement (28, 32) einer Eingabevorrichtung (8) der mobilen elektronischen Vorrichtung, und
ein Ablauf vorgegebenen Zeitdauer ohne eine Erfassung einer weiteren Eingabe von der Eingabevorrichtung.

18. Maschinenlesbares Speichermedium gemäß einem der Ansprüche 13 bis 17, wobei die Operationen weiter aufweisen:
Unterziehen der Texteingabe; einer Rechtschreibprüfroutine (44);
Identifizieren mit der Rechtschreibprüfroutine einer Vielzahl von vorgeschlagenen Rechtschreibkorrekturen, die jeweils eine Editier-Distanz von eins von der Texteingabe haben; und
Ausgeben, als die Anzahl von vorgeschlagenen Rechtschreibkorrekturen, von weniger als allen der Vielzahl von vorgeschlagenen Rechtschreibkorrekturen.

## Revendications

1. Procédé destiné à fournir sur un dispositif électronique mobile (4) un certain nombre de corrections orthographiques proposées pour une entrée de texte (52) ayant une pluralité de caractères (56), le procédé consistant à :
détecter la position d'un curseur (48) sur ou à proximité immédiate d'au moins un caractère de l'entrée de texte ;
délivrer un certain nombre de corrections orthographiques proposées (68, 168) comprenant chacune un certain nombre de caractères (56) et comprenant une différence de caractères par rapport à l'entrée de texte, qui consiste en au moins l'un :
d'un caractère de l'entrée de texte sur ou à proximité immédiate du curseur, qui est absent d'une position correspondante dans la correction orthographique proposée ;
de la correction orthographique proposée comprenant un caractère supplémentaire à l'entrée de texte et disposé à une position, dans la correction orthographique proposée, qui correspond au fait d'être sur ou à proximité immédiate du curseur dans l'entrée de texte,
d'un caractère dans l'entrée de texte situé sur ou à proximité immédiate du curseur, qui est remplacé par un caractère différent à une position correspondante dans la correction orthographique proposée, et
d'un caractère de l'entrée de texte situé sur ou à proximité immédiate du curseur et d'un autre caractère contigu à celui-ci dans l'entrée de texte, qui se trouvent à des positions permutée dans la correction orthographique proposée.

2. Procédé selon la revendication 1, consistant en outre à supprimer de la sortie les éventuelles corrections orthographiques proposées qui ne comportent pas, par rapport à l'entrée de texte, une différence de caractère qui consiste en au moins l'un :
d'un caractère de l'entrée de texte situé sur ou à proximité immédiate du curseur, qui est absent d'une position correspondante dans la correction orthographique proposée ;
de la correction orthographique proposée comprenant un caractère supplémentaire à l'entrée de texte et disposé à une position, dans la corrections orthographique proposée, qui correspond au fait d'être sur ou à proximité immédiate du curseur dans l'entrée de texte ;
d'un caractère de l'entrée de texte situé sur ou à proximité immédiate du curseur, qui est remplacé par un caractère différent à une position correspondante dans la correction orthographique proposée ; et
d'un caractère de l'entrée de texte situé sur ou à proximité immédiate du curseur et d'un autre caractère contigu à celui-ci dans l'entrée de texte, qui sont à des positions permutées dans la correction orthographique proposée.

3. Procédé selon la revendication 2, consistant en outre à :
soumettre l'entrée de texte à un programme de correction orthographique (44) ;
identifier à l'aide du programme de correction orthographique une pluralité de corrections orthographiques proposées comprenant une première correction orthographique proposée et une seconde correction orthographique proposée ;
effectuer la suppression correspondant à la première correction orthographique proposée en réponse à la détermination du fait que la première correction orthographique proposée ne comporte pas, par rapport à l'entrée de texte, une différence de caractères qui consiste en au moins l'un :
d'un caractère de l'entrée de texte situé sur ou à proximité du curseur, qui est absent d'une position correspondante dans la correction orthographique proposés,
de la correction orthographique proposée comprenant un caractère supplémentaire à l'entrée de texte et disposé à une position, dans la correction orthographique proposés, qui correspond au fait d'être située sur ou à proximité immédiate du curseur dans l'entrée de texte ;
d'un caractère de l'entrée de texte situé sur ou à proximité immédiate du curseur, qui est remplacé par un caractère différent à une position correspondante dans la correction orthographique proposée, et
d'un caractère de l'entrée de texte situé sur ou à proximité immédiate du curseur et d'un autre caractère contigu à celui-ci dans l'entrée de texte, qui sont à des positions permutées dans la correction orthographique proposée ; et
exécuter la sortie de la seconde correction orthographique proposée en réponse à la détermination du fait que à seconde correction orthographique proposée comprend, par rapport à l'entrée de texte, une différence de caractères qui consiste en au moins l'un :
d'un caractère dans l'entrée de texte situé sur ou à proximité immédiate du curseur, qui est absent d'une position correspondante dans la correction orthographique proposée ;
de la correction orthographique proposée comprenant un caractère supplémentaire à l'entrée de texte et disposé à une position, dans la correction orthographique proposée, qui correspond au fait d'être sur ou à proximité immédiate du curseur dans l'entrée de texte,
d'un caractère dans l'entrée de texte situé sur ou à proximité immédiate du curseur, qui est remplacé par un caractère différent à une position correspondante dans la correction orthographique proposée, et
d'un caractères dans l'entrée de texte situé sur ou à proximité immédiate du curseur et d'un autre caractère contigu à celui-ci dans l'entrée de texte, qui sont à des positions permutées dans la correction orthographique proposée.

4. Procédé selon l'une quelconque des revendications 1 à 3, consistant en outre à :
détecter une entrée de mouvement qui déplace le curseur vers la position située sur ou à proximité immédiate de l'au moins un caractère de l'entrée de texte ;
détecter une entrée prédéterminés après la détection de l'entrée de mouvement ; et
en réponse à la détection de l'entrée de mouvement, déclencher la fourniture en sortie dudit nombre de corrections orthographiques proposées.

5. Procédé selon la revendication 4, consistant en outre à détecter, en tant qu'entrée prédéterminée, l'une :
d'une entrée provenant d'un élément d'entrée prédéterminé (28, 32) d'un appareil d'entrée (8) du dispositif électronique mobile, et
d'une expiration d'un intervalle de temps prédéterminé sans détection d'une autre entrée provenant de l'appareil d'entrée.

6. Procédé selon l'une quelconque des revendications 1 à 5, consistant en outre à :
soumettre l'entrée de texte à un sous-programme de correction orthographique (44) ;
identifier à l'aide du sous-programme de correction orthographique une pluralité de corrections orthographiques proposées ayant une distance de modification égale à un par rapport à l'entrée de texte ; et
fournir en sortie en tant que ledit nombre de corrections orthographiques proposées un nombre plus faible que la totalité de la pluralité de corrections orthographiques proposées.

7. Dispositif électronique mobile (4) conçu pour fournir un certain nombre de corrections orthographiques proposées pour une entrée de texte (52) comportant une pluralité de caractères (56), le dispositif électronique mobile comprenant :
un appareil à processeur (16) comprenant un processeur (36) et une mémoire (40) ;
un appareil d'entrée (8) conçu pour fournir une entrée à l'appareil à professeur ;
un appareil de sortie (12) conçu pour recevoir des signaux de sortie du professeur ;
la mémoire stockant un ou plusieurs sous-programmes qui, lorsqu'ils sont exécutés sur le processeur, font en sorte que le dispositif électronique mobile effectue des opérations consistant à :
détecter une position d'un curseur (48) sur ou à proximité immédiate d'au moins un caractère de l'entrée de texte ;
fournir en sortie un certain nombre de corrections orthographiques proposées (68, 168) comprenant chacune un certain nombre de caractère (56) comprenant une différence de caractères par rapport à l'entrée de texte, qui consiste en au moins l'un :
d'un caractère de l'entrée de texte situé sur ou à proximité immédiate du curseur, qui est absent d'une position correspondante dans la correction orthographique proposée ;
de la correction orthographique proposée comprenant un caractère supplémentaire à l'entrée de texte et disposé à une positions, dans la correction orthographique proposée, qui correspond au fait d'être sur ou à proximité immédiate du curseur dans l'entrée de texte,
d'un caractère de l'entrée de texte situé sur ou à proximité immédiate du curseur, qui est remplacé par un caractère différent à une position correspondante dans la correction orthographique proposée, et d'un caractère de l'entrée de texte situé sur ou à proximité immédiate du curseur et d'un autre caractère contigu à celui-ci dans l'entrée de texte, qui sont à des positions permutées dans la correction orthographique proposée.

8. Dispositif électronique mobile selon la revendication 7, dans lequel les opérations comprennent en outre la suppression de la sortie des éventuelles corrections orthographiques proposées qui ne présentant pas, par rapport à l'entrée de texte, une différence de caractères qui consiste en au moins l'un :
d'un caractère de l'entrée de texte situé sur ou à proximité immédiate du curseur, qui est absent d'une position correspondante dans la correction orthographique proposée ;
de la correction orthographique proposée comprenant un caractère supplémentaire à l'entrée de texte et disposé à une position, dans la correction orthographique proposée, qui correspond au fait d'être sur ou à proximité immédiate du curseur dans l'entrée de texte ;
d'un caractère dans l'entrée de texte situé sur ou à proximité immédiate du curseur, qui est remplacé par un caractère différent à une position correspondante dans la correction orthographique proposée ; et
d'un caractère de l'entrée de texte situé sur ou à proximité immédiate du curseur et d'un autre caractère contigu à celui-ci dans l'entrée de texte, qui se trouvent à des positions permutées dans la correction orthographique proposée.

9. Dispositif électronique mobile selon la revendication 8, dans lequel les opérations consistent en outre à :
soumettre l'entrée de texte à un sous-programme de correction orthographique (44) ;
identifier à l'aide du sous-programme de correction orthographique une pluralité de corrections orthographiques proposées comprenant une première correction orthographique proposée et une seconde correction orthographique proposée ;
effectuer la suppression concernant la première correction orthographique proposée en réponse à la détermination du fait que la première correction orthographique proposée ne comporte pas, par rapport à l'entrée de texte, une différence de caractères qui est au moins l'un :
d'un caractère de l'entrée de texte situé sur ou à proximité immédiate du curseur, qui est absent d'une position correspondante dans la correction orthographique proposée,
de la correction orthographique proposée comprenant un caractère supplémentaire à l'entrée de texte et disposé à une position, dans la correction orthographique proposée, qui correspond au fait d'être sur ou à proximité immédiate du curseur dans l'entrée de texte,
d'un caractère de l'entrée de texte situé sur ou à proximité immédiate du curseur, qui est remplacé par un caractère différent à une position correspondante dans la correction orthographique proposée ; et
d'un caractère de l'entrée de texte situé sur ou à proximité immédiate du curseur et d'un autre caractère contigu à celui-ci dans l'entrée de texte, qui sont à des positions permutées dans la correction orthographique proposée ; et
effectuer la sortie de la seconde correction orthographique proposée en réponse à la détermination du fait que la seconde correction orthographique proposée comprend, par rapport à l'entrée de texte, une différence de caractères qui consiste en au moins l'un :
d'un caractère de l'entrée de texte situé sur ou à proximité immédiate du curseur, qui est absent d'une position correspondante dans la correction orthographique proprosée,
de la correction orthographique proposée comprenant un caractère supplémentaire à l'entrée de texte et disposé à une position, dans la correction orthographique proposée, qui correspond au fait d'être sur ou à proximité immédiate du curseur dans l'entrée de texte,
d'un caractère de l'entrée de texte situé sur ou à proximité immédiate du curseur, qui est remplacé par un caractère différent à une position correspondante dans la correction orthographique proposée, et
d'un caractère de l'entrée de texte situé sur ou à proximité immédiate du curseur et d'un autre caractère contigu à celui-ci dans l'entrée de texte, qui sont à des positions permutées dans la correction orthographique proposée.

10. Dispositif électronique mobile selon l'une quelconque des revendications 7 à 9, dans lequel les opérations consistent en outre à :
détecter une entrée de mouvement qui déplace le curseur vers une position située sur ou à proximité immédiate d'au moins un caractère dans l'entrée de texte ;
détecter une entrée prédéterminée après la détection de l'entrée de mouvement ; et
en réponse à la détection de l'entrés prédéterminée, déclencher la sortie dudit nombre de corrections orthographiques proposées.

11. Dispositif électronique mobile selon la revendication 10, dans lequel les opérations consistent en outre à détecter, en tant qu'entrée prédéterminée, l'une :
d'une entrée provenait d'un élément d'entrée prédéterminé (28, 32) d'un appareil d'entrée (8) du dispositif électronique mobile, et
d'une expiration d'un intervalle de temps prédéterminé sans détection d'une autre entrée provenant de l'appareil d'entrée.

12. Dispositif électronique mobile selon l'une quelconque des revendications 7 à 11, dans lequel les opérations consistent en outre à :
soumettre l'entrée de texte à un sous-programme de correction orthographique (44) ;
identifier à l'aide du sous-programme de correction orthographique une pluralité de corrections orthographiques proposées ayant chacune une distance de modification égale à un par rapport à l'entrée de texte ; et
fournir en sortie en tant que ledit nombre de corrections orthographiques proposées un nombre plus faible que la totalité de la pluralité de corrections orthographiques proposées.

13. Support de stockage lisible par machine (40) comprenant un ou plusieurs sous-programmes qui, lorsqu'ils sont exécutés sur un processeur (36) d'un Dispositif électronique (4) capable de fournir un certain nombre de corrections orthographiques proposées pour une entrée de texte (52) ayant une pluralité de caractères (56), font en sorte que le dispositif électronique mobile exécute des opérations consistant à :
détecter la position d'un curseur (48) sur ou à proximité immédiate d'au moins un caractère de l'entrée de texte ;
fournir en sortie un certain nombre de corrections orthographiques proposées (68, 168) comprenant chacune un certain nombre de caractères (56) et comprenant, par rapport à l'entrée de texte, une différence de caractères qui consiste en au moins l'un :
d'un caractère de l'entrée de texte situé sur ou à proximité immédiate du curseur, qui est absent d'une position correspondante dans la correction orthographique proposée,
de la correction orthographique proposée comprenant un caractère supplémentaire à l'entrée de texte et disposé à une position, dans la correction orthographique proposée, qui correspond au fait d'être sur ou à proximité immédiate du curseur dans l'entrée de texte,
d'un caractère de l'entrée de texte situé sur ou à proximité immédiate du curseur, qui est remplacé par un caractère différent à une position correspondante dans la correction orthographique proposée, et
d'un caractère de l'entrée de texte, situé sur ou à proximité immédiate du curseur et d'un autre caractère contigu à celui-ci dans l'entrée de texte, qui sont à des positions permutées dans la correction orthographique proposée.

14. Support de stockage lisible par machine selon la revendication 13, dans lequel les opérations consistent en outre à supprimer de la sortie les éventuelles corrections orthographiques proposées qui ne présentent pas, par rapport à l'entrée de texte, une différence de caractères qui consiste en au moins l'un :
d'un caractère de l'entrée de texte situé sur ou à proximité immédiate du curseur, qui est absent d'une position correspondante dans la correction orthographique proposée ;
de la correction orthographique proposée comprenant un caractère supplémentaire à l'entrée de texte et disposé à une position, dans la correction orthographique proposée, qui correspond au fait d'être sur ou à proximité immédiate du curseur dans l'entrée de texte ;
d'un caractère de l'entrée de texte situé sur ou à proximité immédiate du curseur, qui est remplacé par un caractère différent à une position correspondante dans la correction orthographique proposée ; et
d'un caractère de l'entrée de texte situé sur ou à proximité immédiate du curseur et d'un autre caractère contigu a celui-ci dans l'entrée de texte, qui sont à des positions permutées dans la correction orthographique proposée.

15. Support de stockage lisible par machine selon la revendication 14, dans lequel les opérations consistent en outre à :
soumettre l'entrée de texte à un sous-programme de correction orthographique (44) ;
identifier à l'aide du sous-programme de correction orthographique une pluralité de corrections orthographiques proposées comprenant une première correction orthographique proposée et une seconde correction orthographique proposée ;
effectuer la suppression concernant la première correction orthographique proposée en réponse à la détermination du fait que la première correction orthographique proposée ne présente pas, par rapport à l'entrée de texte, une différence de caractère qui consiste en au moins l'un :
d'un caractère de l'entrée de texte situé sur ou à proximité immédiate du curseur, qui est absent d'une position correspondante dans la correction orthographique proposée,
de la correction orthographique proposée comprenant un caractère supplémentaire à l'entrée de texte et disposé à une position, dans la correction orthographique proposée, qui correspond au fait d'être sur ou à proximité immédiate du curseur dans l'entrée de texte,
d'un caractère de l'entrée de texte situé sur ou à proximité immédiate du curseur, qui est remplacé par un caractère différent à une position correspondante dans la correction orthographique proposée, et
d'un caractère de l'entrée de texte situé sur ou à proximité immédiate du curseur et d'un autre caractère contigu à celui-ci dans l'entrée de texte, qui sont à des positions permutées dans à correction orthographique proposée ; et
effectuer la sortie de la seconde correction orthographique proposée en réponse à la détermination du fait que la seconde correction orthographique proposée comprend, par rapport à l'entrée de texte, une différence de caractères qui consiste en au moins l'un :
d'un caractère dans l'entrée de texte situé sur ou à proximité immédiate du curseur, qui est différent d'une position correspondante dans la correction orthographique proposée,
de la correction orthographique proposée comprenant un caractère supplémentaire à l'entrée de texte et disposé à une position, dans la correction orthographique proposée, qui correspond au fait d'être sur ou à proximité immédiate du curseur dans l'entrée de texte,
d'un caractère de l'entrée de texte situé sur ou à proximité immédiate du curseur, qui est remplacé par un caractère différent à une position correspondante dans la correction orthographique proposée, et
d'un caractère dans l'entrée de texte situé sur ou à proximité immédiate du curseur et d'un autre caractère contigu à celui-ci dans l'entrée de texte, qui sont à des positions permutées dans la correction orthographique proposée.

16. Support de stockage lisible par machine selon l'une quelconque des revendications 13 à 15, dans lequel les opérations consistent en outre à :
détecter une entrée de mouvement qui déplace le curseur vers la position située sur ou à proximité immédiate de l'au moins un caractère de l'entrée de texte ;
détecter une entrée prédéterminée après la détection de l'entrée de mouvement ; et
en réponse à la détection de l'entrée prédéterminée, déclencher la sortie dudit nombre de corrections orthographiques proposées.

17. Support de stockage lisible par machine selon la revendication 16, dans lequel les opérations consistent en outre à détecter en tant qu'entrée prédéterminée l'une :
d'une entrée provenant d'un élément d'entrée prédéterminé (28, 32) d'un appareil d'entrée (8) du dispositif électronique Mobile, et
d'une expiration d'un intervalle de temps prédéterminé sans détection d'une autre entrée provenant de l'appareil d'entrée.

18. Support de stockage lisible par machine selon l'une quelconque des revendications 13 à 17, dans lequel les opérations consistent en outre à :
soumettre l'entrée de texte à un sous-programme de correction orthographique (44) ;
identifier à l'aide du sous-programme de correction orthographique une pluralité de corrections orthographique proposées ayant chacune une distance de modification égale à un par rapport à l'entrée de texte ; et
fournir en sortie en tant que ledit nombre de corrections orthographique proposées un nombre plus faible que la totalité de la pluralité de corrections orthographiques proposées.
